# EUROPEAN PATENT APPLICATION

(11) **EP 4 852 592 A1**
(43) Date of publication of application: **09.12.2026**
(21) Application number: 24922802.4
(22) Date of filing: 06.02.2024
(51) Int. Cl.: H04W 72/50

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN); LI, Yapu, Dongguan, Guangdong 523860 (CN); GAO, Ning, Dongguan, Guangdong 523860 (CN)
(74) Representative: RGTH
(86) International application number: PCT/CN2024/076412
(87) International publication number: WO 2025/166559

(57) **Abstract**

Provided are a wireless communication method and a communication device. The method comprises: a first device sends a first frame, wherein the first frame is used for instructing the first device to share with a plurality of STAs part of a TXOP duration acquired by the first device, the plurality of STAs include a first STA and a second STA, and within the part of the TXOP duration, a data unit sent by the first STA and a data unit sent by the second STA are allowed to fully or partially overlap in a time domain and a frequency domain. By means of the first frame, an AP can share a TXOP with the plurality of STAs, and the data units sent by the plurality of STAs can overlap in the time domain and the frequency domain, improving the medium utilization rate, and thus improving the communication efficiency.

## Description

### TECHNICAL FIELD

This application relates to the field of communications technologies, and more specifically, to a wireless communication method and a communications device.

### BACKGROUND

A transmission opportunity (transmission opportunity, TXOP) sharing (TXOP sharing, TXS) mechanism is proposed in some communications systems. Based on the TXOP sharing mechanism, an access point (access point, AP) may allocate its TXOP to a single non-access point station (non-AP station, non-AP STA) associated with the AP. The non-AP STA may implement uplink (uplink, UL) physical layer protocol data unit (physical layer protocol data unit, PPDU) and/or peer-to-peer (peer-to-peer, P2P) frame exchange based on a sharing TXOP.

### SUMMARY

This application provides a wireless communication method and a communications device. Various aspects of this application are described below.

According to a first aspect, a wireless communication method is provided, where the method includes: transmitting, by a first device, a first frame, where the first frame is used to indicate that the first device shares part of duration of a TXOP obtained by the first device with a plurality of stations (STAs), the plurality of STAs include a first STA and a second STA, and in part of duration of the TXOP, a data unit transmitted by the first STA and a data unit transmitted by the second STA are allowed to overlap fully or partially in time domain and frequency domain.

According to a second aspect, a wireless communication method is provided, where the method includes: receiving, by a second device, a first frame transmitted by a first device, where the second device includes a first STA or a second STA, the first frame is used to indicate that the first device shares part of duration of a TXOP obtained by the first device with a plurality of STAs, the plurality of STAs include a first STA and a second STA, and in the part of duration of the TXOP, a data unit transmitted by the first STA and a data unit transmitted by the second STA are allowed to overlap fully or partially in time domain and frequency domain.

According to a third aspect, a communications device is provided. The communications device is a first device, and the communications device includes: a transmitting unit, configured to transmit a first frame, where the first frame is used to indicate that the first device shares part of duration of a TXOP obtained by the first device with a plurality of STAs, the plurality of STAs include a first STA and a second STA, and in part of duration of the TXOP, a data unit transmitted by the first STA and a data unit transmitted by the second STA are allowed to overlap fully or partially in time domain and frequency domain.

According to a fourth aspect, a communications device is provided. The communications device is a second device, and the communications device includes: a receiving unit, configured to receive a first frame transmitted by a first device, where the second device includes a first STA or a second STA, the first frame is used to indicate that the first device shares part of duration of a TXOP obtained by the first device with a plurality of STAs, the plurality of STAs include a first STA and a second STA, and in the part of duration of the TXOP, a data unit transmitted by the first STA and a data unit transmitted by the second STA are allowed to overlap fully or partially in time domain and frequency domain.

According to a fifth aspect, a communications device is provided. The communications device includes a processor and a memory. The memory is configured to store one or more computer programs. The processor is configured to invoke the computer program in the memory, to cause the communications device to perform some or all of the steps of a method according to the foregoing aspects.

According to a sixth aspect, an embodiment of this application provides a communications system, and the system includes the foregoing communications device. In another possible design, the system may further include another device that interacts with the communications device in the solution provided in embodiments of this application.

According to a seventh aspect, an embodiment of this application provides a computer-readable storage medium. The computer-readable storage medium stores a computer program, and the computer program causes a communications device to perform some or all of the steps in the method according to the foregoing aspects.

According to an eighth aspect, an embodiment of this application provides a computer program product. The computer program product includes a non-transitory computer-readable storage medium storing a computer program, and the computer program is operable to cause a communications device to perform some or all of the steps of a method according to the foregoing aspects. In some implementations, the computer program product may be a software installation package.

According to a ninth aspect, an embodiment of this application provides a chip, where the chip includes a memory and a processor, and the processor may invoke a computer program from the memory and run the computer program, to implement part or all of steps described in the method according to the foregoing aspects.

Based on the first frame, the AP may share a TXOP with a plurality of STAs, and data units transmitted by the plurality of STAs may overlap in time domain and frequency domain, thereby improving medium utilization and further improving communication efficiency.

### BRIEF DESCRIPTION OF DRAWINGS

FIG. 1 is a schematic diagram of a wireless communications system to which embodiments of this application are applicable.
FIG. 2 is an example diagram of TXOP sharing by using coordinated spatial reuse.
FIG. 3A is a schematic diagram of a scenario for coordinated spatial reuse transmission.
FIG. 3B is a schematic diagram of another scenario for coordinated spatial reuse transmission.
FIG. 4 is a schematic diagram of a spatial reuse process based on parameterized spatial reuse.
FIG. 5 is a schematic flowchart of a wireless communication method according to an embodiment of this application.
FIG. 6 is a schematic diagram of a format of a trigger frame based on TXOP sharing according to an embodiment of this application.
FIG. 7 is a schematic diagram of a format of a common information field of an MU-RTS trigger frame according to an embodiment of this application.
FIG. 8 is a schematic diagram of a format of a user information field of a first frame according to an embodiment of this application.
FIG. 9A is a schematic diagram of a format of a user information field in an MU-RTS TXS trigger frame according to an embodiment of this application.
FIG. 9B is a schematic diagram of a format of a trigger dependent user information field according to an embodiment of this application.
FIG. 10 is an example diagram of a format of a block acknowledgement frame.
FIG. 11A is an example diagram of a format of a per AID TID information field.
FIG. 11B is an example diagram of a format of an AID TID information field.
FIG. 12 is an example diagram of a format of a per AID TID information field according to an embodiment of this application.
FIG. 13 is an example flowchart of a wireless communication method according to Embodiment 1 of this application.
FIG. 14 is an example flowchart of a wireless communication method according to Embodiment 2 of this application.
FIG. 15 is an example flowchart of a wireless communication method according to Embodiment 3 of this application.
FIG. 16 is a schematic structural diagram of a communications device according to an embodiment of this application.
FIG. 17 is a schematic structural diagram of another communications device according to an embodiment of this application.
FIG. 18 is a schematic structural diagram of an apparatus used for communication according to an embodiment of this application.

### DESCRIPTION OF EMBODIMENTS

Technical solutions in this application are described below with reference to the accompanying drawings.

### Communications system

The technical solutions in embodiments of this application may be applied to various communications systems, for example, a wireless local area network (wireless local area networks, WLAN), wireless fidelity (wireless fidelity, WiFi), a high performance radio local area network (high performance radio local area networks, HIPELAN), a wide area network (wide area networks, WAN), a cellular network, or another communications system. For another example, the technical solutions in embodiments of this application may be applied to a communications system using the 802.11 standard. For example, the 802.11 standard includes but is not limited to the 802.11ax standard, the 802.11be standard, a subsequent next generation 802.11 standard, or the like.

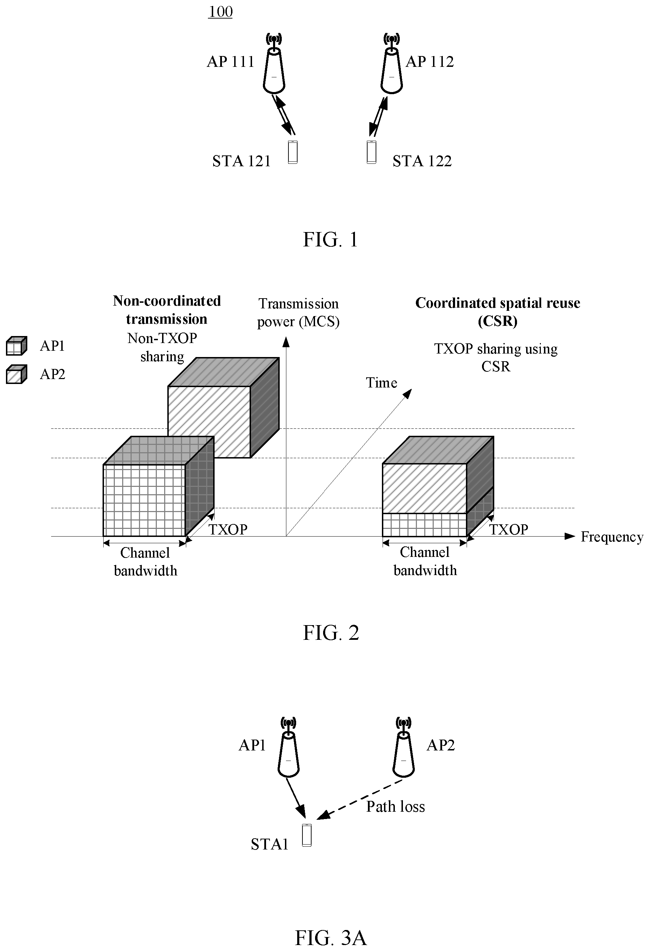

FIG. 1 is a schematic diagram of a communications system to which embodiments of this application are applied. Referring to FIG. 1, communications devices in a communications system 100 may include an access point (access point, AP) 111, an AP 112, a station (station, STA) 121, and a STA 122, where the STA 121 may access a network via the AP 111, and the STA 122 may access a network via the AP 112.

In some implementations, a STA may establish an association relationship with one or more APs. Then, the STA and the AP(s) that have an association relationship may communicate with each other. With reference to FIG. 1, the AP 111 and the STA 121 may communicate with each other after an association relationship is established therebetween; and the AP 112 and the STA 122 may communicate with each other after an association relationship is established therebetween.

In some implementations, communication in the communications system 100 may be communication between an AP and a non-AP STA, or may be communication between one non-AP STA and another non-AP STA, or may be communication between a STA and a peer STA, where the peer STA may refer to a device that performs peer-to-peer communication with the STA, for example, the peer STA may be an AP, or may be a non-AP STA.

It should be understood that FIG. 1 exemplarily shows two AP STAs and two non-AP STAs. Alternatively, the communications system 100 may include more AP STAs, or the communications system 100 may include another quantity of non-AP STAs. This is not limited in embodiments of this application.

In addition, the communications system may be applied to scenarios of multi-device collaboration, for example, a scenario of multiple AP (multiple access points, multi-AP) collaboration, a scenario of multi-station collaboration, or the like.

Names the AP and/or STA are not limited in embodiments of this application. In some scenarios, an AP may also be referred to as an AP STA. In other words, in a sense, the AP is also a STA. In some other scenarios, a STA may also be referred to as a non-AP STA (non-AP STA).

In some scenarios, the foregoing communications device may alternatively be a "multi-link device (multi-link device, MLD)", namely, a device that may perform communication through a plurality of communications links. The plurality of communications links may include communications links of different frequency bands, for example, may include a millimeter-wave frequency band and/or a low frequency band. Generally, if the multi-link device is an AP, the AP may also be referred to as a "multi-link AP"; if the multi-link device is a STA, the STA may also be referred to as a "multi-link STA".

In embodiments of this application, the AP may be a device in a wireless network. The AP may be a communications entity, for example, a communications server, a router, a switch, a network bridge, or the like; or the AP device may include various forms of macro base stations, micro base stations, relay stations, or the like. Certainly, the AP may alternatively be a chip, a circuit, or a processing system in these various forms of devices, to implement a method and a function in embodiments of this application. The AP may be applied to a variety of scenarios, for example, a sensor node in a smart city (for example, a smart water meter, a smart electricity meter, or a smart air detection node), a smart device in a smart home (for example, a smart camera, a projector, a display screen, a TV, a speaker, a refrigerator, a washing machine, or the like), a node in the Internet of Things, an entertainment terminal (for example, a wearable device such as AR or VR), a smart device in a smart office (for example, a printer, a projector, or the like), a vehicle-to-everything device in the Internet of Vehicles, some infrastructure in daily life scenarios (for example, a vending machine, a self-service navigation station in a shopping mall or supermarket, a self-service cashier device, or a self-ordering kiosk), or the like.

In some implementations, a role of the STA in the communications system is not fixed. In some scenarios, the STA may serve as an AP. For example, in a scenario in which a mobile phone is connected to a route, the mobile phone may be a non-AP STA; in a case that the mobile phone serves as a hotspot of another mobile phone, the mobile phone acts as an AP.

In embodiments of this application, a STA in embodiments of this application may be a device having a wireless transceiver function, for example, may be a device that supports protocols 802.11 series and may communicate with an AP or another STA. For example, the STA is any communications device of a user that allows the user to communicate with an AP and then communicate with WLAN. The STA is, for example, a user equipment (user equipment, UE), a mobile station (mobile station, MS), a mobile terminal (mobile terminal, MT), an access terminal, a subscriber unit, a subscriber station, a mobile site, a mobile station, a remote station, a remote terminal, a mobile device, a user terminal, a terminal, a wireless communications device, a user agent, a user apparatus, or the like.

The STA in embodiments of this application may alternatively be a device providing a user with voice/data connectivity, for example, a handheld device, a vehicle-mounted device, or the like having a wireless connection function. For example, the STA is a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example rather than limitation, in embodiments of this application, the STA may alternatively be a wearable device. The wearable device may also be referred to as a wearable intelligent device, and is a general term for wearable devices such as glasses, gloves, watches, clothes, and shoes that are intelligently designed and developed by applying wearable technologies to daily wearing. For example, the wearable device is a smart watch or smart glasses, or a device that focuses on only a specific type of application function and is required to cooperate with another device such as a smart phone for use, for example, various smart bracelets, smart jewelries, or the like for physical sign monitoring.

In addition, in embodiments of this application, the STA may alternatively be a terminal device in an Internet of Things (internet of things, IoT) system. The IoT is an important component of future development of information technologies, and a main technical feature of the IoT is that objects are connected to a network by using a communication technology, to implement an intelligent network of human-computer interconnection and interconnection of things. In embodiments of this application, the IoT technology may implement mass connection, intensive coverage, and terminal power saving by using a narrow band (narrow band, NB) technology or the like.

In addition, in embodiments of this application, the STA may be a device in a vehicle-to-everything system. Communication methods in the vehicle-to-everything system are collectively referred to as V2X (where X represents everything). For example, the V2X communication includes: vehicle to vehicle (vehicle to vehicle, V2V) communication, vehicle to roadside infrastructure (vehicle to infrastructure, V2I) communication, vehicle to pedestrian (vehicle to pedestrian, V2P) communication, vehicle to network (vehicle to network, V2N) communication, or the like.

In addition, in embodiments of this application, the STA may further include sensors such as a smart printer, a train detector, a gas station, or the like. Main functions of the device include: data collection (some terminal devices), receiving of control information and downlink data of the AP, transmitting of an electromagnetic wave, and transmission of data to the AP.

In addition, the AP in embodiments of this application may be a device for communicating with the STA device. The AP may be a network device in a wireless local area network. The AP may be configured to communicate with the STA device through the wireless local area network.

From the perspective of a communication standard supported by an AP, in some implementations, the AP may be a device that supports the 802.11be standard. The AP may alternatively be a device that supports a plurality of existing and future WLAN standards of the 802.11 family, such as 802.11ax, 802.11ac, 802.11n, 802.11g, 802.11b, and 802.11a.

From the perspective of a communication standard supported by a STA, in some implementations, the non-AP STA may support the 802.11be standard. The non-AP STA may also support a plurality of existing and future wireless local area network (wireless local area networks, WLAN) standards of an 802.11 family, such as 802.11ax, 802.11ac, 802.11n, 802.11g, 802.11b, and 802.11a.

Frequency bands supported in a WLAN technology are not limited in embodiments of this application. In some implementations, the frequency bands supported in the WLAN technology may include but are not limited to a low frequency band (for example, 2.4 GHz, 5 GHz, or 6 GHz) and a high frequency band (for example, 45 GHz or 60 GHz).

It should be understood that specific forms of the STA and the AP are not specially limited in embodiments of this application and are only described exemplarily herein.

### TXOP sharing (TXOP sharing, TXS)

In some communications systems, an AP may allocate a TXOP of the AP to a single non-AP STA associated with the AP. The non-AP STA may implement UL PPDU and/or P2P frame exchange based on the sharing TXOP.

The AP may share the TXOP with the non-AP STA by using a multi-user request to send TXOP sharing (multi-user request to send TXOP sharing, MU-RTS TXS) trigger (trigger) frame. For example, a triggered TXOP sharing mode (triggered TXOP sharing mode) field of a common information (common Info) field of a multi-user request to send (multi-user request to send, MU-RTS) trigger frame may be used to represent a TXOP sharing mode. If the triggered TXOP sharing mode subfield is 0, it may indicate that the AP does not use TXOP sharing, that is, the trigger frame is a common MU-RTS trigger frame rather than an MU-RTS TXS trigger frame. If the triggered TXOP sharing mode subfield is 1 or 2, it may indicate that the AP uses TXOP sharing, that is, the trigger frame is an MU-RTS TXS trigger frame.

### Coordinated spatial reuse (coordinated spatial reuse, CSR)

For a multi-AP coordinated operation scenario, CSR is proposed in a related technology. The CSR may achieve TXOP sharing among a plurality of APs participating in multi-AP coordinated operations. The following describes TXOP sharing using CSR with reference to FIG. 2.

As shown in FIG. 2, an AP 1 and an AP 2 may simultaneously communicate with their associated stations respectively in a channel bandwidth and duration corresponding to a sharing TXOP by using coordinated spatial reuse for TXOP sharing. It can be learned from FIG. 2 that a time domain resource and a frequency domain resource occupied by the AP 1 and AP 2 for communication with their associated stations are both overlapping.

Before performing CSR transmission among a plurality of APs, the APs participating in CSR need to negotiate and establish CSR. A CSR setup procedure is performed by exchanging a request/response frame. In the CSR setup procedure, a parameter involved in CSR may be negotiated. For examples, there are two APs (an AP 1 and an AP 2). One AP may transmit a CSR trigger frame to another AP to initiate CSR transmission within its TXOP. The AP transmitting the CSR trigger frame may be referred to as a sharing AP (sharing AP), and the AP receiving the CSR trigger frame may be referred to as a shared AP (shared AP). If a multi-AP coordinated transmission (including CSR) protocol has been established between the two APs, then in duration of the sharing TXOP, the AP 1 and AP 2 may simultaneously communicate with their associated stations, respectively.

In CSR transmission, APs participating in CSR need to know a path loss between a scheduled STA and an interfering AP. For the sharing AP, power of the interfering AP may be controlled based on the path loss between the scheduled STA and the interfering AP, thereby reducing interference from the interfering AP to the scheduled STA. FIG. 3A shows a scenario of CSR transmission. As shown in FIG. 3A, an AP 1 schedules a STA 1 associated with the AP 1. In a case of CSR transmission, the AP 1 needs to know a path loss between an AP 2 (the interfering AP) and the STA 1.

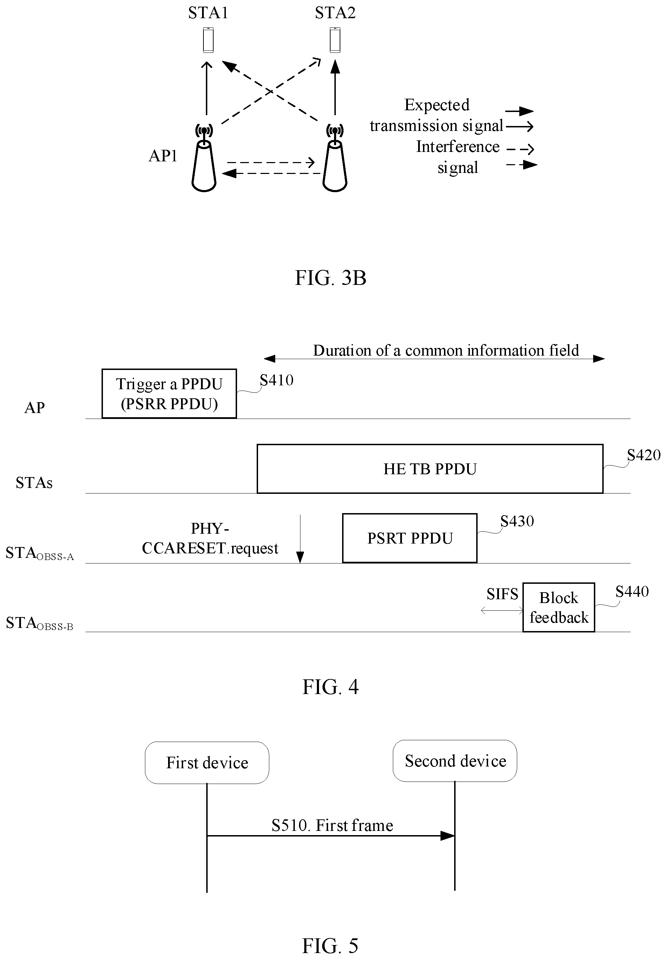

Based on the above case, path loss measurement needs to be performed before the CSR transmission. For a scenario shown in FIG. 3A, as shown in FIG. 3B, the AP 1 needs to know the path loss between the AP 2 (the interfering AP) and the STA 1. If the AP 1 is a sharing AP, the AP 1 may control power of the AP 2 by using the path loss. In addition, the AP 1 may estimate a signal to interference plus noise ratio (signal to interference plus noise ratio, SINR) at the STA 1 by using the path loss. Path loss measurement may be implemented based on a beacon request/response (beacon request/response) and null data packet (null data packet, NDP) measurement mechanism in a related technology.

### Spatial reuse based on parameterized spatial reuse (parameterized spatial reuse, PSR) and spatial reuse based on overlapping basic service set (overlapping basic service set, OBSS) packet detect (packet detect, PD)

To achieve early identification of an OBSS signal and interference management, a corresponding spatial reuse operation (or called spatial re-use operation) is proposed in related technologies (such as, the IEEE 802.11ax specification), so that more frequent medium reuse may be allowed among OBSSs in a dense deployment scenario.

In the related technologies, two independent spatial reuse modes are defined: spatial reuse based on OBSS PD and spatial reuse based on parameterized spatial reuse (parameterized spatial reuse, PSR), which are described below.

The spatial reuse based on OBSS PD includes two types: one is implemented based on a non-SRG OBSS PD threshold (level), and allows a STA to ignore an inter-BSS PPDU using the non-SRG OBSS PD threshold under a specific condition; and the other is implemented based on an SRG OBSS PD threshold, and allows a STA to ignore, by using the SRG OBSS PD threshold under a specific condition, an inter-BSS PPDU that is identified as an SRG PPDU.

The PSR-based spatial reuse may be implemented based on a PSR opportunity.

A PSR opportunity may be identified from a value of a receive vector (RXVECTOR) parameter spatial reuse (SPATIAL_REUSE) of a trigger-based PPDU (for example, an HE TB PPDU) and/or from content of a trigger frame. A STA may initiate an SR transmission during a PSR opportunity for duration of an ongoing PPDU when some conditions, designed to avoid interfering with reception of the ongoing PPDU at the recipient, are met. If the value of the RXVECTOR parameter SPATIAL_REUSE of the ongoing PPDU is PSR disallowed (PSR_DISALLOW), or non-SRG OBSS PD prohibited (PSR_AND_NON_SRG_OBSS_PD_PROHIBITED), no PSR-based spatial reuse (spatial reuse, SR) transmission is allowed for the transmission of the PPDU.

It should be noted that a STA identifying a PSR opportunity may choose not to perform network allocation vector (network allocation vector, NAV) update operation performed based on the receive RXVECTOR parameter TXOP_DURATION and a trigger frame duration (duration) field.

The PSR-based spatial reuse is illustrated below by using an example with reference to FIG. 4. The method illustrated in FIG. 4 may be performed by an AP, STAs associated with the AP (represented by STAs in FIG. 4), and OBSS STAs. In FIG. 4, the OBSS STAs may include a STA_{OBSS-A} and a STA_{OBSS-B}. A procedure of PSR-based spatial reuse illustrated in FIG. 4 may include steps S410 to S440.

In step S410, the AP may transmit a triggering PPDU (triggering PPDU). The triggering PPDU may be a PSRR PPDU.

A trigger frame carried by the PSRR PPDU may trigger transmission of an uplink HE TB PPDU.

In step S420, in response to receiving the PSRR PPDU, the STAs may transmit the HE TB PPDU.

In step S430, the STA_{OBSS-A} identifies a PSR opportunity and transmits one PSRT PPDU to another OBSS STA (namely, STA_{OBSS-B}).

It should be noted that, if a value of a RXVECTOR parameter BSS color (BSS_COLOR) of the HE TB PPDU matches a BSS color of the PSRR PPDU, the OBSS STA (namely, STA_{OBSS-A}) identifying the PSR opportunity should not transmit a PSRT PPDU exceeding PPDU duration (namely, duration from a common information field (duration from common info field)) of the HE TB PPDU triggered by the trigger frame of the PSRR PPDU.

In step S440, the STA_{OBSS-B} feeds back a block acknowledgement (block Ack, BA) frame for the PSRT PPDU in step S430.

FIG. 5 is a schematic flowchart of a wireless communication method according to an embodiment of this application. The method illustrated in FIG. 5 may be executed by a first device and a second device. For example, the first device may include an AP; the second device may include one or more STAs associated with the AP. For example, the second device may include a first STA (for example, a first STA) and/or a second STA (for example, a second STA). Both the first STA and the second STAmay be non-access point STAs. In a case that the first device includes an AP, both the first STA and the second STA may be associated with the first device.

It should be noted that a STA may include one or more stations. For example, the STA may be an MLD.

The method illustrated in FIG. 5 may include step S510.

Step S510, the first device transmits a first frame.

In some embodiments, the first frame may be used to indicate that the first device shares part of duration of a TXOP obtained by the first device with a plurality of STAs. The plurality of STAs may include the first STA and the second STA. Furthermore, in a time of sharing TXOP (or allocated TXOP) (namely, the part of duration of the TXOP described above), a data unit transmitted by the first STA and a data unit transmitted by the second STA are allowed to overlap in time domain and frequency domain. That is to say, based on the first frame, the first device may share a TXOP obtained by itself with a plurality of STAs for communication, and within an allocated TXOP, data units transmitted by the plurality of STAs may overlap in time domain and frequency domain. In this case, any one of the plurality of STAs may be referred to as a shared STA.

In some embodiments, the first frame may be used to schedule a plurality of STAs to transmit data units in part of duration a TXOP obtained by the first device. Furthermore, within the duration of the corresponding TXOP, a data unit transmitted by the first STA and a data unit transmitted by the second STA are allowed to overlap in time domain and frequency domain. That is to say, based on the first frame, the first device may schedule a plurality of STAs to communicate within the TXOP obtained by the first device, and within the duration of the corresponding TXOP, data units transmitted by the plurality of STAs may overlap in time domain and frequency domain. In this case, any one of the plurality of STAs may be referred to as a scheduled STA. Based on this, the first STA may be any one of the plurality of scheduled STAs scheduled by the first frame, and the second STA may be a STA, different from the first STA, in the plurality of STAs.

It should be noted that an embodiment below applied to a scheduled STA may also be applied to a shared STA, or an embodiment applied to a shared STA may also be applied to a scheduled STA. That is to say, a scheduled station and a shared station may be interchanged.

It should be noted that overlapping in frequency domain and time domain may include: the data unit transmitted by the first STA and the data unit transmitted by the second STA partially or fully overlap in time domain; and the data unit transmitted by the first STA and the data unit transmitted by the second STA partially or fully overlap in frequency domain. For example, two data units overlapping in time domain may mean that: a start time of one data unit is earlier than an end time of the other data unit. Two data units fully overlapping in time domain may mean that: start times of the two data units are the same and end times of the two data units are also the same. Two data units partially overlapping in time domain may mean that: start times of the two data units are different from each other and/or end times of the two data units are different from each other, and the start time of one data unit is earlier than the end time of the other data unit.

It should be noted that the part of duration of the TXOP shared by the first device with a STA may be referred to as an allocated TXOP or a sharing TXOP. A TXOP allocated for the first STA may be the same as or different from a TXOP allocated for the second STA.

Thus, it may be seen that in this application, data units respectively transmitted by the plurality of scheduled STAs may overlap in time domain and frequency domain. Therefore, based on the first frame, the AP may share a TXOP with a plurality of STAs, and data units transmitted by the plurality of STAs may overlap in time domain and frequency domain, thereby improving medium utilization and further improving communication efficiency.

In some embodiments, the data unit transmitted by the first STA and the data unit transmitted by the second STA being allowed to overlap in time domain and frequency domain may include that: the data unit transmitted by the first STA and the data unit transmitted by the second STA are allowed to be transmitted via spatial reuse.

For example, spatial reuse-based TXOP sharing may be implemented in this application. The spatial reuse-based TXOP sharing technology proposed in this application may allow an AP to share a part of an obtained TXOP with two or more STAs associated with the AP, and the two or more STAs associated with the AP may perform spatial reuse transmission within the sharing TXOP.

For another example, in this application, scheduled-based spatial reuse transmission may be performed according to a transmission requirement of the STAs. That is to say, according to this application, an AP may allocate a part of an obtained TXOP to two or more STAs associated with the AP, to schedule the two or more STAs associated with the AP to perform spatial reuse transmission within the sharing TXOP.

As can be seen from the above description, in a related technology, the spatial reuse technology is generally applied in the multi-AP coordination technology and OBSS scenarios. For example, based on CSR for multi-AP coordinated operations, a plurality of APs (for example, an AP 1 and an AP 2) of different BSSs can simultaneously communicate with their respective associated stations in a channel bandwidth and duration corresponding to a sharing TXOP. In this scenario, trigger frames need to be exchanged between different APs to ensure that the different APs are within the communication range. However, in this application, TXOP sharing based on a spatial reuse technology under a single AP may be implemented. In addition, for technologies of PSR-based spatial reuse in an OBSS scenario and spatial reuse based on OBSS PD, a station obtains a PSR opportunity randomly. For example, if a station does not actively identify or fails to identify a PSR opportunity, the station will not perform spatial reuse transmission. However, based on the first frame of this application, scheduling of spatial reuse transmission may be achieved.

It should be noted that the data unit described in embodiments of this application may include one or more of the following: a medium access control protocol data unit (medium access control protocol data unit, MPDU), or a PPDU.

In some embodiments, the first frame may be a trigger frame. For example, the first frame may include an MU-RTS trigger frame. Since the first frame may be used to implement TXOP sharing, the first frame may alternatively be a type of MU-RTS TXS trigger frame. For example, the first frame may be defined based on an MU-RTS trigger frame defined in a related technology. Thus, it can be seen that the first frame proposed in this application may be implemented by using a frame format defined in a related technology. Therefore, implementation of the first frame is simple and may be compatible with related technologies.

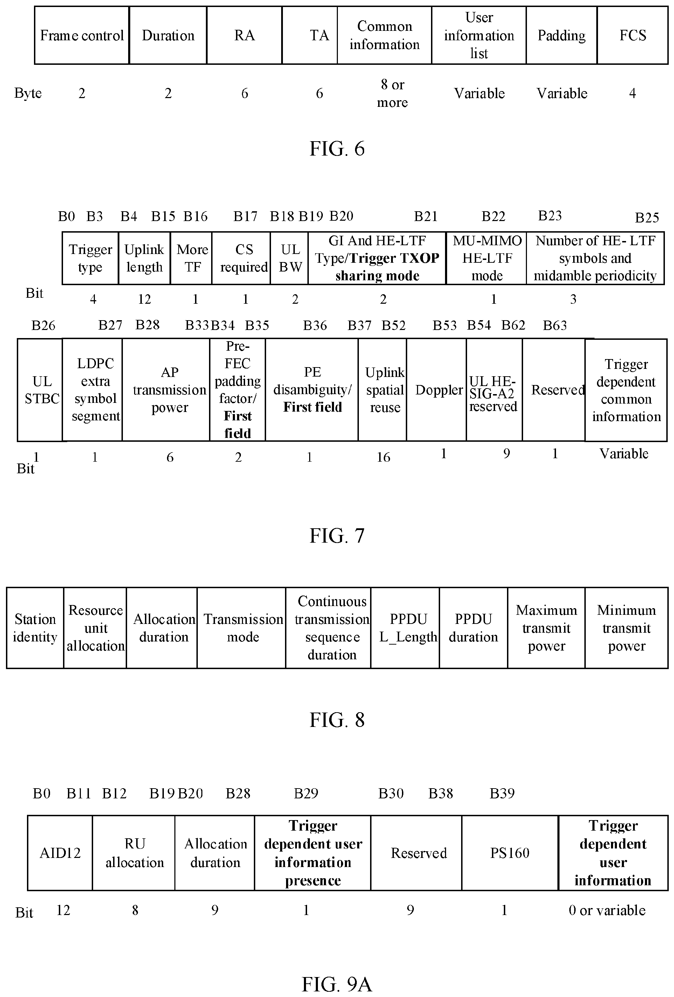

FIG. 6 is an example diagram of a format of a trigger frame based on TXOP sharing according to an embodiment of this application. The first frame may be a trigger frame based on TXOP sharing as illustrated in FIG. 6. As shown in FIG. 6, the trigger frame based on TXOP sharing may include one or more of following fields: a frame control field, a duration field, a receiver address (receiver address, RA) field, a transmission address (transmission address, TA) field, a common information (common info) field, a user information list (user info list) field, a padding (padding) field, or a frame check sequence (frame check sequence, FCS) field. The frame control field may occupy 2 octets (octet); the duration field may occupy 2 octets; the RA field may occupy 6 octets; the TA field may occupy 6 octets; the common information field may occupy 8 or more octets; a quantity of octets occupied by the user information list field may be variable (variable); a quantity of octets occupied by the padding field may be variable; and the FCS field may occupy 4 octets.

In some embodiments, the first frame may indicate that: in a time of a sharing TXOP, a first STA can transmit a data unit to an access point associated with the first STA or to a STA different from the first STA; and/or, within time of a sharing TXOP, a second STA can transmit a data unit to an access point associated with the second STA or to a STA different from the second STA. The STA different from the first STA may include a P2P peer STA of the first STA. The STA different from the second STA may include a P2P peer STA of the second STA.

For example, the first frame may indicate that: a scheduled STA may transmit MPDU(s) to its associated AP or transmit MPDU(s) to another STA (for example, its P2P peer STA); and/or another scheduled STA may transmit MPDU(s) to another STA (for example, its P2P peer STA) or transmit MPDU(s) to its associated AP.

In a possible implementation, a trigger TXOP sharing mode field in the common information field of the first frame may indicate a newly defined first mode. That is to say, the trigger TXOP sharing mode field may add a new value to indicate the first mode. The first mode may, for example, indicate that: in a part of duration of a TXOP, the first STA can transmit a data unit to its associated access point or to a STA different from the first STA; and/or, in a part of duration of the TXOP, the second STA can transmit a data unit to its associated access point or to a STA different from the second STA.

As mentioned above, the first frame may be an MU-RTS trigger frame. In some embodiments, it may be determined whether the MU-RTS trigger frame is the first frame based on a value of the TXOP sharing mode field. For example, if the value of the TXOP sharing mode field is a first value, then the trigger frame may be the first frame. That is, it may indicate that: in a part of duration of a TXOP, the first STA can transmit a data unit to its associated access point or to a STA different from the first STA; and/or, in a part of duration of the TXOP, the second STA can transmit a data unit to its associated access point or to a STA different from the second STA. The first value may, for example, be greater than or equal to 3.

For example, in a definition of the trigger TXOP sharing mode field in the common information field of the MU-RTS trigger frame, based on a definition in a related technology, a trigger TXOP sharing mode field value may be additionally defined. The added value may, for example, be the first value. The first value may be used to indicate that an MU-RTS frame initiates a TXS procedure, where a scheduled STA may transmit MPDU(s) to its associated AP or transmit MPDU(s) to another STA (for example, its P2P peer STA); and/or another scheduled STA may transmit MPDU(s) to another STA (for example, its P2P peer STA) or transmit MPDU(s) to its associated AP. In Table 1, the first value being 3 is used as an example for explanation.

**Table 1**

| Trigger TXOP sharing mode subfield value | Description |
|---|---|
| 0 | MU-RTS does not initiate a TXS procedure |
| 1 | MU-RTS initiates a TXS procedure, where a scheduled STA can only transmit an MPDU to its associated AP (that is, a receiver address of the MPDU is an AP) |
| 2 | MU-RTS initiates a TXS procedure, where one scheduled STA may transmit MPDU(s) to its associated AP, or transmit MPDU(s) to another STA. |
| 3 | MU-RTS initiates a TXS procedure, where a scheduled STA may transmit MPDU(s) to its associated AP or transmit MPDU(s) to another STA (for example, its P2P peer STA); and/or another scheduled STA may transmit MPDU(s) to another STA (for example, its P2P peer STA) or transmit MPDU(s) to its associated AP. |

In some embodiments, the first frame may be used to trigger or initiate the first STA and the second STA to transmit data units that overlap in time domain and frequency domain. Alternatively, the first frame may be used to indicate whether the first STA and the second STA initiate or enable transmission of data units that overlap in time domain and frequency domain. For example, the first frame may indicate whether spatial reuse transmission is allowed for the data unit transmitted by the first STA and the data unit transmitted by the second STA, or the first frame may be used to indicate whether to initiate spatial reuse-based TXOP sharing for the first STA and the second STA.

In a case that the first STA and the second STA do not initiate transmission of data units overlapping in time domain and frequency domain, the data units transmitted by the first STA and the second STA cannot overlap in both time domain or frequency domain. Alternatively, in a case that the first STA and the second STA do not initiate transmission of data units overlapping in time domain and frequency domain, among the plurality of STAs indicated by the first frame, only one STA can transmit a data unit. Alternatively, in a case that the first STA and the second STA initiate transmission of data units overlapping in time domain and frequency domain, the data units transmitted by the first STA and the second STA cannot overlap in both time domain or frequency domain. In a case that the first STA and the second STA initiate transmission of data units overlapping in time domain and frequency domain, both the first STA and the second STA may transmit data units, and the data unit transmitted by the first STA and the data unit transmitted by the second STA may overlap in time domain and frequency domain.

In some embodiments, the first frame may indicate whether to initiate transmission of data units overlapping in time domain and frequency domain via a first field. For example, a value of 0 for the first field may instruct not to initiate transmission of data units overlapping in time domain and frequency domain; a non-zero value for the first field may instruct to initiate transmission of data units overlapping in time domain and frequency domain.

In some embodiments, the first field may indicate whether to initiate, start, or enable a spatial reuse-based TXOP sharing procedure. In this case, the first field may be referred to as a spatial reuse mode field. For example, a value of 0 for the spatial reuse mode field may instruct not to initiate spatial reuse-based TXOP sharing; a non-zero value for the spatial reuse mode field may instruct to initiate spatial reuse-based TXOP sharing.

The first field may belong to the common information field of the first frame. For example, the first field may belong to the common information field of the MU-RTS trigger frame.

In some embodiments, a field from related technologies may be redefined as the first field. In related technologies (for example, the IEEE 802.11be standard), a pre-FEC padding factor (Pre-FEC padding factor) field and a PE disambiguity (PE Disambiguity) field in the common information field of the MU-RTS trigger frame may be reserved fields. Therefore, one or more bits corresponding to the pre-FEC padding factor field and the PE disambiguity field may be used to define the first field. That is, the definition of the first field may be added in definition of the common information field of the MU-RTS trigger frame.

FIG. 7 is a schematic diagram of a format of a common information field of an MU-RTS trigger frame according to an embodiment of this application. As shown in FIG. 7, the common information field of the MU-RTS trigger frame may include one or more of the following fields: trigger type (trigger type), uplink length (UL length), more TF (more TF), CS required (CS required), uplink bandwidth (UL BW), GI and HE-LTF type (GI And HE-LTF Type), trigger TXOP sharing mode, MU-MIMO HE-LTF mode (MU-MIMO HE-LTF mode), number of HE- LTF symbols and midamble periodicity (Number Of HE- LTF Symbols And Midamble Periodicity), UL STBC, LDPC extra symbol segment (LDPC Extra Symbol Segment), AP transmit power (AP Tx power), pre-FEC padding factor, PE disambiguity, uplink spatial reuse (UL Spatial Reuse), Doppler (Doppler), UL HE- SIG-A2 reserved (UL HE- SIG-A2 Reserved), or trigger dependent common information (Trigger Dependent Common Info). As shown in FIG. 7, the first field may be located at the position corresponding to the pre-FEC padding factor field and/or the PE disambiguity field.

In duration of a sharing TXOP, duration of a continuous transmission sequence of the first STA may be first duration, and duration of a continuous transmission sequence of the second STA may be second duration. The duration of the continuous transmission sequence may refer to duration of continuous frame interaction between a scheduled STA and a peer STA. For example, when the scheduled STA transmits a PPDU carrying a data frame to the peer STA (P2P STA), the peer STA replies with an ACK frame after receiving the data frame. If the scheduled STA does not immediately transmit a PPDU to the peer STA after an SIFS following an end time of the PPDU carrying the ACK frame, the duration of the continuous transmission sequence is (PPDU duration for transmitting the data frame + PPDU duration for replying with the ACK frame + SIFS).

In some embodiments, the first frame may be used to indicate a size relationship between the first duration and the second duration. For example, the first frame may indicate that the first duration is greater than or equal to the second duration. For another example, the first frame may indicate that the first duration is less than or equal to the second duration. For yet another example, the first frame may indicate that the first duration is equal to the second duration, and a start time and an end time of the first duration and the second duration are both aligned.

For example, the first duration may be P2P continuous transmission sequence duration between the first STA and another STA different from the first STA. For another example, the first duration may be continuous transmission sequence duration between the first STA and its associated AP. For another example, the second duration may be P2P continuous transmission sequence duration between the second STA and another STA. For another example, the second duration may be continuous transmission sequence duration between the second STA and its associated AP. Based on this, the first frame may indicate any one of the following: within the duration of the sharing TXOP, P2P continuous transmission sequence duration between a scheduled STA and another STA is less than or equal to transmission duration of an uplink PPDU (that is, a PPDU carrying an MPDU transmitted to the AP) initiated by another scheduled STA; within the duration of the sharing TXOP, continuous transmission sequence duration between a scheduled STA and an AP is less than or equal to transmission duration of a P2P PPDU initiated by another scheduled STA; within the duration of the sharing TXOP, P2P continuous transmission sequence duration between a scheduled STA and another STA is less than or equal to transmission duration of a P2P PPDU initiated by another scheduled STA; or in the duration of the sharing TXOP, transmission of a P2P PPDU initiated by a scheduled STA and transmission of a P2P PPDU initiated by another scheduled STA are aligned in a start time and an end time of PPDU transmission.

In some embodiments, the size relationship between the first duration and the second duration may be indicated by a second field in the first frame.

The second field may belong to the common information field of the first frame. For example, the second field may belong to the common information field of the MU-RTS trigger frame.

Optionally, the second field and the first field may be a same field. That is, the size relationship between the first duration and the second duration and whether to initiate transmission of data units overlapping in time domain and frequency domain may be indicated by a same field. For example, both the first field and the second field may be the spatial reuse mode field. Table 2 shows an encoding example of a spatial reuse mode field.

**Table 2**

| Spatial reuse mode field value | Description |
|---|---|
| 0 | The first frame does not initiate spatial reuse-based TXOP sharing. |
| 1 | Within the duration of the sharing TXOP, P2P continuous transmission sequence duration between a scheduled STA and another STA is less than or equal to transmission duration of an uplink PPDU (that is, a PPDU carrying an MPDU transmitted to the AP) initiated by another scheduled STA. |
| 2 | Within the duration of the sharing TXOP, continuous transmission sequence duration between a scheduled STA and an AP is less than or equal to transmission duration of a P2P PPDU initiated by another scheduled STA. |
| 3 | Within the duration of the sharing TXOP, P2P continuous transmission sequence duration between a scheduled STA and another STA is less than or equal to transmission duration of a P2P PPDU initiated by another scheduled STA. |
| 4 | In the duration of the sharing TXOP, transmission of a P2P PPDU initiated by a scheduled STA and transmission of a P2P PPDU initiated by another scheduled STA are aligned in a start time and an end time of PPDU transmission. |
| Other | Reserved |

It should be noted that Table 2 is merely an example. Part of content in Table 2 may be implemented separately. In some embodiments, correspondence between values of the spatial reuse mode field and the descriptions may be different from that shown in Table 2. For example, a spatial reuse mode field value of 1 may indicate that, within the duration of the sharing TXOP, continuous transmission sequence duration between a scheduled STA and an AP is less than or equal to transmission duration of a P2P PPDU initiated by another scheduled STA; a spatial reuse mode field value of 4 may indicates that, in the duration of the sharing TXOP, transmission of a P2P PPDU initiated by a scheduled STA and transmission of a P2P PPDU initiated by another scheduled STA are aligned in a start time and an end time of PPDU transmission.

In some embodiments, the first frame may be used to trigger both the first STA and the second STA to transmit data units. The first STA and the second STA may perform spatial reuse transmission.

In some embodiments, the first frame may be used to trigger the first STA to transmit a data unit and to trigger the second STA to monitor or receive the data unit transmitted by the first STA; or the first frame may be used to trigger the second STA to transmit a data unit and to trigger the first STA to monitor or receive the data unit transmitted by the second STA. That is to say, the first frame may be used to trigger part of STAs to transmit data units and part of STAs to monitor the data units.

The first STA or the second STA monitoring or receiving the data unit may be referred to that the first STA or the second STA enters a monitoring state. A STA entering the monitoring state may transmit no data unit.

The STA may determine path loss of another STA by monitoring or receiving a data unit transmitted by another STA. Therefore, a process of monitoring or receiving the data unit transmitted by the another STA may also be referred to as a channel sounding function. For example, the second STA may determine information of a reception parameter of the data unit transmitted by the first STA, and estimate path loss of the first STA based on the reception parameter; and/or the first STA may determine information of a reception parameter of the data unit transmitted by the second STA, and estimate path loss of the second STA based on the reception parameter.

The information of the reception parameter may include one or more of the following: RSSI, RCPI, SINR, SNR, transmit power, packet error rate, or the like.

The information of the reception parameter may also be referred to as a channel sounding result. That is to say, a channel sounding function may be integrated into the spatial reuse-based TXOP sharing technical solution provided in this application.

Optionally, in a case that the first STA is in the monitoring state, the first STA may transmit, to the first device, a channel sounding result of the second STA obtained through monitoring. In a case that the second STA is in the monitoring state, the second STA may transmit, to the first device, a channel sounding result of the first STA obtained through monitoring.

Based on the channel sounding result, the first device may adjust a transmission parameter and/or transmission mode of a corresponding STA, thereby adjusting or optimizing transmission of the corresponding STA in part of duration of the sharing TXOP in a timely manner, and thus avoiding interference between STAs. For example, the first device may determine whether a condition for spatial reuse is met. If the condition for spatial reuse is met, the first device may trigger the first STA and the second STAto perform spatial reuse transmission. If the condition for spatial reuse is not met, the first device may trigger one of the first STA and the second STA to transmit a data unit.

The following uses an example in which the first device is an AP, the first STA is a STA 1, and the second STA is a STA 2 for explanation. After the AP transmits the first frame (for example, a trigger frame), in a time of an allocated TXOP, a scheduled STA (for example, the STA 1) transmits an uplink non-TB PPDU (carrying an MPDU transmitted to the AP) according to an indication of the first frame. Within the time of the allocated TXOP, another scheduled STA (for example, the STA 2) is in a monitoring state according to the indication of the first frame. The STA 2 may determine whether a condition for spatial reuse is met by receiving an uplink PPDU signal transmitted by the STA 1 and based on a transmit power for transmitting a PPDU by the STA 1. In addition, the STA 2 may subsequently report, to the AP by using an allocated resource, received feedback information (for example, received power, RSSI, or whether spatial reuse is allowed) about the uplink PPDU signal transmitted by the STA 1.

In some embodiments, the first frame may be used to indicate a transmission parameter for the first STA within the duration of the sharing TXOP. As mentioned above, the first STA may belong to the plurality of scheduled STAs. Therefore, the first frame may be used to indicate a transmission parameter for some or all of the plurality of scheduled STAs in part of the duration of the sharing TXOP. The transmission parameter may, for example, be related to transmission information related to spatial reuse.

Based on a transmission parameter corresponding to the scheduled STAs, the first device may constrain a transmission behavior of the scheduled STAs to avoid interference between the scheduled STAs. For example, the transmission parameter corresponding to the scheduled STAs is indicated, so that the first frame may be used to constrain transmission of the corresponding STAs to comply with spatial reuse requirements, thereby avoiding or reducing interference between transmissions initiated by any two scheduled STAs.

Optionally, the transmission parameter of the first STA in part of the duration of the TXOP may be carried in a user information field corresponding to the first STA. For example, for the first frame, the transmission parameter of the scheduled STA in part of the duration of the sharing TXOP may be carried in a user information field corresponding to a corresponding STA.

The transmission parameter of the first STA within the sharing TXOP may include one or more of the following: first information, resource unit allocation, allocation duration, transmission mode, receiver type, transmission duration, first length, third duration, or transmit power.

The first information may be used to indicate identity information of the first STA. Based on the first information, a receiver of the first frame may learn that the corresponding transmission parameter is indicated for the first STA.

The first information may be carried in a STA identity field of the first frame. The STA identity field may be, for example, an AID12 field.

The resource unit allocation may be used to indicate a size and/or location of a resource unit corresponding to a TXOP shared by the first device with the first STA. The resource unit may include an RU and/or an MRU. In other words, when spatial reuse-based TXOP sharing is initiated, the resource unit allocation field is used to indicate a size and/or location of a resource unit that is allocated to the scheduled STA and permitted for transmission.

The resource unit allocation may be carried in a resource unit allocation (RU allocation) field. The resource unit allocation field, together with an uplink bandwidth (UL BW) field in the common information field, a UL BW extension field in a special user information field (if present) and a PS160 subfield in the user information field (if present), may identify the size and location of the RU or MRU.

The allocation duration may be used to indicate duration of a TXOP that is shared by the first device with the first STA. A unit of the allocation duration is not limited in this application. For example, the unit of the allocation duration may be 16 µs.

The allocation duration may be carried in an allocation duration field of the first frame. The allocation duration field may be used to indicate duration allocated to the scheduled STA within the TXOP obtained by the first device.

The transmission mode may be used to indicate that the first STA is triggered to transmit a data unit, or the first STA is triggered to monitor or receive a data unit transmitted by the second STA (that is, in a monitoring state). In a case that the first STA is triggered to monitor or receive a data unit transmitted by a second STA, the first STA may not transmit a data unit.

The transmission mode may be carried in a transmission mode field of the first frame. That is to say, the transmission mode field may be used to indicate whether a scheduled device transmits a data unit or is in a monitoring state.

The receiver type may be used to indicate that a receiver of the data unit transmitted by the first STA is an associated access point or a STA different from the first STA. The STA different from the first STA may be a P2P STA of the first STA. In other words, the receiver type may indicate whether a scheduled STA(or shared STA) exchanges a frame in time of an allocated TXOP with its associated AP or with a P2P STA of a scheduling STA.

The receiver type may be carried in the transmission mode field of the first frame. That is to say, the transmission mode field may not only be used to indicate the transmission mode described above, but may also be used to indicate the receiver type. Encoding of the transmission mode field may be as shown in Table 3.

**Table 3**

| Value of transmission mode field | Description |
|---|---|
| 0 | A scheduled STA does not transmit a PPDU in part of duration of a shared TXOP, but is in a monitoring state. |
| 1 | A scheduled STA transmits an MPDU to its associated AP in part of duration of a shared TXOP. |
| 2 | A scheduled STA transmits an MPDU to another STA in part of duration of a shared TXOP (for example, for P2P transmission) |
| 3 | Reserved |

It should be noted that Table 3 is merely an example. Part of content in Table 3 may be implemented separately. Alternatively, Table 3 may be supplemented with other content. Alternatively, correspondence between the values of the transmission mode field and the descriptions may be different from that shown in Table 3. For example, the value of the transmission mode subfield being 0 indicates that a scheduled STA transmits an MPDU to its associated AP in TXOP duration; the value of the transmission mode subfield being 1 indicates that a scheduled STA transmits an MPDU to another STA in TXOP duration (that is, for P2P Transmission).

The transmission duration may be used to indicate duration allowed for a continuous transmission sequence of the first STA. The transmission duration may indicate a continuous transmission sequence duration allowed for frame exchange between the first device and a peer STA in time of an allocated TXOP, and a unit may be set to 16 µs. The continuous transmission sequence duration may refer to duration of continuous frame interaction between first STA and a peer STA. For example, when the first STA transmits a PPDU carrying a data frame to the peer STA (P2P STA), the peer STA replies with an ACK frame after receiving the data frame. If the first STA does not immediately transmit a PPDU to the peer STA after an SIFS following an end time of the PPDU carrying the ACK frame, the duration of the continuous transmission sequence is (PPDU duration for transmitting the data frame + PPDU duration for replying with the ACK frame + SIFS).

The transmission duration may be carried in a continuous transmission sequence duration field in the first frame. That is to say, the continuous transmission sequence duration field may be used to indicate duration of the continuous transmission sequence allowed for a scheduled STA.

The first length may be used to indicate a value of an L-SIG length field of the data unit transmitted by the first STA. The data unit may include a PPDU. Therefore, the first length may indicate a value of the L-SIG length field of the PPDU transmitted by the first STA.

The first length may be carried in a PPDU L_Length field. The PPDU L_Length field may indicate a value of an L-SIG Length field of a PPDU transmitted by a scheduled STA to a peer STA in time of an allocated TXOP.

The third duration may be used to indicate duration or a length allowed for the data unit transmitted by the first STA. The data unit may include a PPDU. Therefore, the third duration may be used to indicate transmission duration of a PPDU transmitted by the first STA to a peer STA.

The third duration may be carried in a PPDU duration field. The PPDU duration field may indicate transmission duration of a PPDU transmitted by a scheduled STA to a peer STA in time of an allocated TXOP, and the unit may be 16 µs.

The transmit power may be used to indicate a power range allowed for the first STA to transmit a data unit. The power range may be represented by, for example, one or more of the following: maximum transmit power, minimum transmit power, average transmit power, or the like. The maximum transmit power may indicate a maximum combined transmit power of transmit antenna connectors of all antennas used by the first STA to transmit a data unit. The minimum transmit power may indicate a minimum combined transmit power of transmit antenna connectors of all antennas used by the first STA to transmit a data unit. The transmit power may also be referred to as a transmission power.

The transmit power may be indicated by using one or more fields. For example, the plurality of fields may include a maximum transmit power field and/or a minimum transmit power field.

The maximum transmit power field may indicate a maximum transmit power for the first STA to transmit a PPDU in duration of an allocated TXOP. Specifically, the maximum transmit power field indicates a maximum combined transmit power of transmit antenna connectors of all antennas used by the first STA to transmit a PPDU, in a unit of dBm/20 MHz. The maximum transmit power PTX(max) in the unit of dBm/20 MHz is calculated as PTX(max) = -20 + FVal(max), where FVal(max) is a value of the maximum transmit power field. A value greater than 60 may be reserved in the maximum transmit power field.

The minimum transmit power field may indicate a minimum transmit power for the first STAto transmit a PPDU in duration of an allocated TXOP. Specifically, the minimum transmit power field indicates a minimum combined transmit power of transmit antenna connectors of all antennas used by the first STA to transmit a PPDU, in a unit of dBm/20 MHz. The minimum transmit power PTX(min) in the unit of dBm/20 MHz is calculated as PTX(min) = -20 + FVal(min), where FVal(min) is a value of the minimum transmit power field. A value greater than 60 may be reserved in the minimum transmit power field.

The second information may be used to indicate a field included in a transmission parameter field of the first STA. The transmission parameter field may be used to carry a transmission parameter of a STA in part of duration of a TXOP. For example, the transmission parameter field may include one or more of the following fields: STA identity, resource unit allocation, allocation duration, transmission mode, continuous transmission sequence duration, PPDU L_Length, PPDU duration, maximum transmit power, or minimum transmit power. For example, the second information may be used to indicate that the first frame includes one or more of the following information: STA identity, resource unit allocation, allocation duration, transmission mode, continuous transmission sequence duration, PPDU L_Length, PPDU duration, maximum transmit power, or minimum transmit power. Alternatively, the second information may be used to indicate that the first frame includes one or more of the following fields: STA identity, resource unit allocation, allocation duration, transmission mode, continuous transmission sequence duration, PPDU L_Length, PPDU duration, maximum transmit power, or minimum transmit power.

According to an indication of the second information, a field included in the first frame may change based on an actual indication, thereby avoiding waste of communication resources. For a receiver, the receiver may accurately parse the first frame based on the indication of the second information, thereby obtaining parameter information indicated by the first frame.

Optionally, the second information may be indicated by a first bitmap. A target bit in the first bitmap may correspond to a first field that can be included in a transmission parameter field of the first STA. The target bit may be used to indicate whether the transmission parameter field includes the first field. The target bit may be any bit in the first bitmap. A plurality of fields that can be included in the transmission parameter field of the first STA may have a one-to-one correspondence with part or all of a plurality of bits in the first bitmap. That is to say, a field actually included in the transmission parameter field of the first STA may be indicated by the first bitmap.

It should be noted that the field that can be included in the transmission parameter field may be an optional field in the transmission parameter field. That is to say, the transmission parameter field may include the field, or not include the field. Whether the field is included may be optional. In other words, the field that can be included may be an additional field of the transmission parameter. Whether the transmission parameter field includes the field may be indicated by the second information. Therefore, the first bitmap may also be referred to as an additional parameter presence bitmap. The additional field in the transmission parameter may include, for example, at least one of the following fields: PPDU L_Length, maximum transmit power, minimum transmit power, PPDU duration, or transmission sequence duration.

In some embodiments, a target bit being 0 may indicate that the first field is not present in the transmission parameter field of the first STA; and a target bit being 1 may indicate that the first field is present in the transmission parameter field of the first STA. Alternatively, a target bit being 1 may indicate that the first field is not present in the transmission parameter field of the first STA; and a target bit being 0 may indicate that the first field is present in the transmission parameter field of the first STA.

For example, if a quantity of fields that can be included in the transmission parameter field of the first STA is N, the first bitmap may include N or more bits. If M bits in the first bitmap may indicate that a corresponding field is present in the transmission parameter field of the first STA, the transmission parameter field of the first STA may include corresponding M fields.

For example, the transmission parameter field of the first STA in the first frame can include the following 5 fields: PPDU L_Length, maximum transmit power, minimum transmit power, PPDU duration, and transmission sequence duration. Correspondingly, the first bitmap may include 5 bits, and each bit may correspond to one of the foregoing 5 fields. The first field may be any one of the 5 fields. For example, the first field may be the maximum transmit power field. The second bit in the first bitmap may be the target bit. That is to say, the second bit in the first bitmap may be used to indicate whether the transmission parameter field of the first STA includes the maximum transmit power field.

The first bitmap may be carried in an additional parameter presence bitmap field.

The transmission parameter may, for example, further include another transmission parameter corresponding to a STA. The another transmission parameter may include, for example, one or more of the following: transmission bandwidth, quantity of spatial streams, MCS parameter, FEC coding type, target receive power, or the like.

In some embodiments, the first frame may include third information. The third information may be used to indicate whether the transmission parameter field of the first STA exists. The transmission parameter field may also be referred to as a trigger dependent user information field. Correspondingly, the third information may be carried in a trigger dependent user information presence field.

The trigger dependent user information presence field may indicate whether a user information field includes the trigger dependent user information field. For example, a value of the trigger dependent user information presence field being 0 may indicate that the user information field does not include a trigger dependent user information subfield, and a value of the trigger dependent user information presence field being 1 may indicate that the user information field includes a trigger dependent user information subfield.

FIG. 8 shows a format of a user information field of a first frame according to an embodiment of this application. As shown in FIG. 8, the user information field may include one or more of the following fields: STA identity, allocation duration, transmission mode, resource unit allocation, continuous transmission sequence duration, PPDU L_Length, PPDU duration, maximum transmit power, or minimum transmit power.

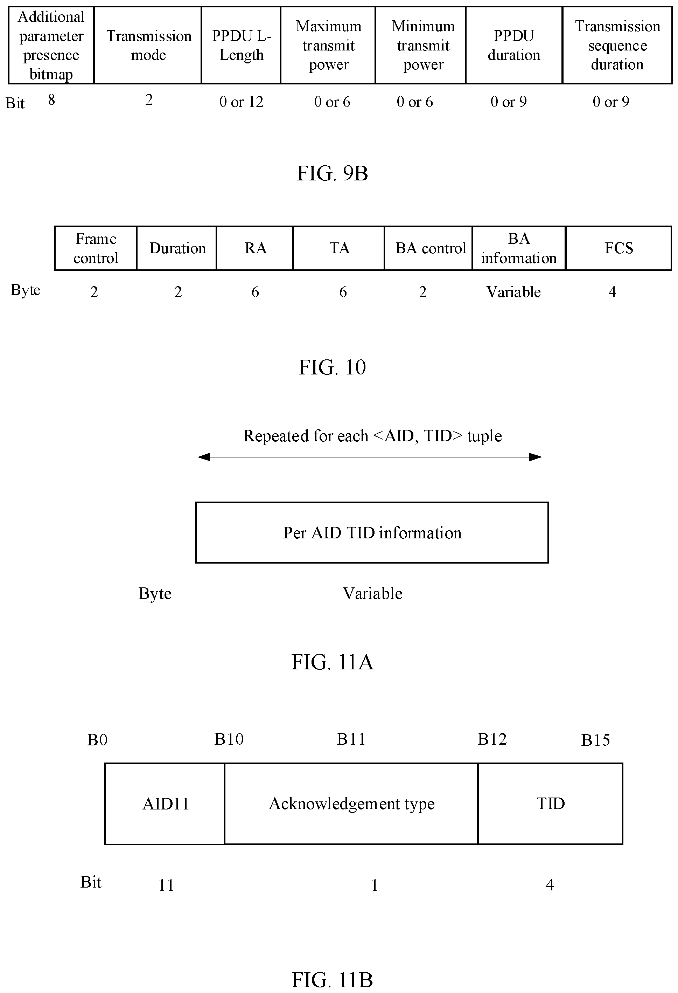

The following describes the first frame provided by embodiments of this application with reference to FIGs. 9A and 9B by using an example in which the first frame is defined based on the MU-RTS trigger frame defined in a related technology.

In FIG. 9A, this application updates and defines a format of a user information field in the MU-RTS TXS trigger frame. The user information field in the MU-RTS TXS trigger frame illustrated in FIG. 9A may include one or more of the following fields: AID12, RU allocation (RU allocation), allocation duration, PS160, reserved, or the like. The user information field of the MU-RTS TXS trigger frame may further include another field, which is not limited in this application.

As shown in FIG. 9A, the user information field in the MU-RTS TXS trigger frame may include a trigger dependent user information presence field and/or a trigger dependent user information field. The trigger dependent user information presence field may occupy 1 bit. If the trigger dependent user information presence field indicates that trigger dependent user information exists, the trigger dependent user information field exists in the user information field, and a quantity of bits occupied by the trigger dependent user information field is variable. If the trigger dependent user information presence field indicates that trigger dependent user information does not exist, no trigger dependent user information field exists in the user information field, and a quantity of bits occupied by the trigger dependent user information field is 0.

FIG. 9B is a schematic diagram of a format of a trigger dependent user information field according to an embodiment of this application. As shown in FIG. 9B, the trigger dependent user information field may include one or more of the following fields: additional parameter presence bitmap, transmission mode, PPDU L-Length, maximum transmit power, minimum transmit power, PPDU duration, or transmission sequence duration.

The additional parameter presence bitmap field may include a first bitmap. If the i^{th} field starting from the PPDU L_Length field appears in the trigger dependent user information field, the i^{th} entry (or i^{th} bit) of the first bitmap may be set to 1.

In some embodiments, the first device may transmit a second frame. The second frame may be used to adjust a transmission parameter of the first STA in part of duration of a sharing TXOP.

Based on the second frame, the first STA may timely adjust or update the transmission parameter, thereby avoiding interference with another STA in part of the duration of the sharing TXOP.

In some embodiments, the transmission parameter of the first STA in the part of duration of the TXOP is determined based on a result of the data unit transmitted by the first STA and monitored or received by the second STA.

As mentioned above, the first frame may be used to trigger the first STA to transmit the data unit and to trigger the second STA to monitor or receive the data unit transmitted by the first STA, that is, trigger the second device to enter a monitoring state. Based on the result of the monitored or received data unit transmitted by the first STA, the first device may determine the transmission parameter of the first STA in the part of duration of the TXOP and indicate the transmission parameter via the second frame.

In some embodiments, the second frame may include a block acknowledgement frame for the data unit transmitted by the first STA. For example, the first STA may transmit a data unit to the first device. In a case that the first device transmits a block acknowledgement frame corresponding to the data unit, the second frame may include the block acknowledgement frame.

The example in which the first device is an AP, the first STA is a STA 1, and the second STA is a STA 2 is still used for description. After the AP transmits the first frame (for example, a trigger frame), in a time of an allocated TXOP, a scheduled STA (for example, the STA 1) transmits an uplink non-TB PPDU (carrying an MPDU transmitted to the AP) according to an indication of the first frame. In the time of the allocated TXOP, another scheduled STA (for example, the STA 2) is in a monitoring state according to the indication of the first frame. The STA 2 may determine whether a condition for spatial reuse is met by receiving an uplink PPDU signal transmitted by the STA 1 and based on a transmit power for transmitting a PPDU by the STA 1. In addition, the STA 2 may subsequently report, to the AP by using an allocated resource, received feedback information (for example, received power, RSSI, or whether spatial reuse is allowed) about the uplink PPDU signal transmitted by the STA 1. After receiving the feedback information reported by the STA 2, the AP may determine whether spatial reuse-based transmission is allowed in part of duration of a subsequent TXOP, as well as a spatial reuse mode and a transmission parameter for a scheduled STA. Moreover, the AP may carry the information in a second frame (a BA frame (which may be a multi-station BA frame) or another trigger frame) and transmit the second frame simultaneously to the STA 1 and STA 2, indicating whether to enable spatial reuse and a spatial reuse mode during duration of a following sharing TXOP, whether transmission performed by the STA 2 and its transmission mode are allowed, and transmission parameters updated for the STA 1 and/or STA 2, such as PPDU L_Length, maximum transmit power, minimum transmit power, PPDU duration, and transmission sequence duration.

Thus, it may be seen that in this application, the block acknowledgement frame may not only be used by a data receiver to acknowledge whether a data frame has been received, but may also carry transmission information related to spatial reuse. For example, the block acknowledgement frame may indicate one or more of the following after the block acknowledgement frame during a current TXOP: whether to enable spatial reuse and a spatial reuse mode, whether transmission performed by a specific STA and its transmission mode are allowed, and transmission parameters updated for the specific STA, such as PPDU L_Length, maximum transmit power, minimum transmit power, PPDU duration, and transmission sequence duration.

In some embodiments, the block acknowledgement frame may be used to timely update a relevant transmission parameter and/or transmission mode based on performance (for example, SNR and SINR of a received signal, data frame transmission success rate, or packet errors) of receiving and transmission frames of a STAs participating in frame exchange in spatial reuse-based transmission.

The following uses an example in which the first device is an AP, the first STA is a STA 1, and the second STA is a STA 2 for explanation. After receiving the first uplink PPDU transmitted by a scheduled STA (for example, the STA 1), the AP may determine, based on the SNR or SINR of the received PPDU and a status of successfully receiving a data frame, whether to allow another scheduled STA (for example, the STA 2) to perform P2P transmission (that is, spatial reuse) in part of duration of a subsequent TXOP, and whether to adjust or update a transmission parameter of the STA 1 and/or the STA 2, and The information is included in a BA frame (which may be a multi-station BA frame) and transmitted simultaneously to the STA 1 and the STA 2. The BA frame may indicate whether to enable spatial reuse and a spatial reuse mode after the block acknowledgement frame during a current TXOP, whether transmission performed by the STA 2 and its transmission mode are allowed, and transmission parameters updated for the STA 1 and/or STA 2 such as PPDU L_Length, maximum transmit power, minimum transmit power, PPDU duration, and transmission sequence duration. For instance, the AP may set a value of a transmission mode subfield in a per AID TID information (Per AID TID Info) subfield corresponding to the STA 2 in the BA frame to 0, instructing the STA 2 to transmit no PPDU but remain in a monitoring state in part of duration of a TXOP following the BA.

FIG. 10 is a schematic diagram of a format of a block acknowledgement frame according to an embodiment of this application. The block acknowledgement frame illustrated in FIG. 10 may be a second frame.

As shown in FIG. 10, the block acknowledgement frame may include one or more of the following fields: frame control (frame control) field, a duration field, an RA field, a TA field, a BA control (BA control) field, a BA information (BA information) field, or an FCS field.

In some embodiments, the second frame may be used to adjust a transmission parameter of the first STA and the second STA in part of duration of a TXOP (namely, an allocated TXOP). For example, the second frame may be used to adjust a transmission parameter of a plurality of STAs for performing spatial reuse transmission.

In some embodiments, the second frame may be used to adjust a transmission mode of the first STA and the second STA. For example, the second frame may be used to trigger both the first STA and the second STA to transmit data units. Alternatively, the second frame may be used to trigger the first STA to transmit a data unit and trigger the second STA to monitor or receive the data unit transmitted by the first STA. Alternatively, the second frame may be used to trigger the second STA to transmit a data unit and trigger the first STA to monitor or receive the data unit transmitted by the second STA.

Behaviors of the STAs (including the first STA and the second STA) triggered by the first frame and the second frame may be the same or may be different from each other. For example, the first frame may be used to trigger the first STA to transmit a data unit and trigger the second STA to monitor or receive the data unit transmitted by the first STA. Based on a result monitored or received by the second STA, the first device may transmit the second frame. The second frame may trigger both the first STA and the second STA to transmit data units, thereby implementing spatial reuse transmission.

In some embodiments, the second frame may be transmitted to a plurality of STAs. For example, the second frame may be transmitted to the first STA and the second STA. For example, when the second frame is a BA frame, the BA frame may be a multi-station block acknowledgement frame. That is, the second frame may be a multi-station block acknowledgement frame variant (multi-STA BlockAck variant).

Optionally, a variant of the BA frame may be indicated by a BA type (BA type) field in a BA control field. For example, when the BA type is 11, the BA frame is a multi-station block acknowledgement frame variant.

In some embodiments, the adjusted transmission parameter of the first STA in part of duration of a TXOP may be indicated by a per AID TID information (per AID TID info) field of the second frame. For example, a BA information field of the multi-station block acknowledgement frame may include one or more per AID TID information fields. FIG. 11A is an example diagram of a format of a BA information field. As shown in FIG. 11A, in the BA information field, per AID TID information field is repeated for each <AID TID> tuple (repeated for each <AID, TID> tuple).

The per AID TID information field may include an AID TID information subfield (AID TID info subfield). A format of the AID TID information subfield may be as shown in FIG. 11B. As shown in FIG. 11B, the AID TID information subfield may include one or more of the following fields: AID11, acknowledgement type (Ack type), or TID.

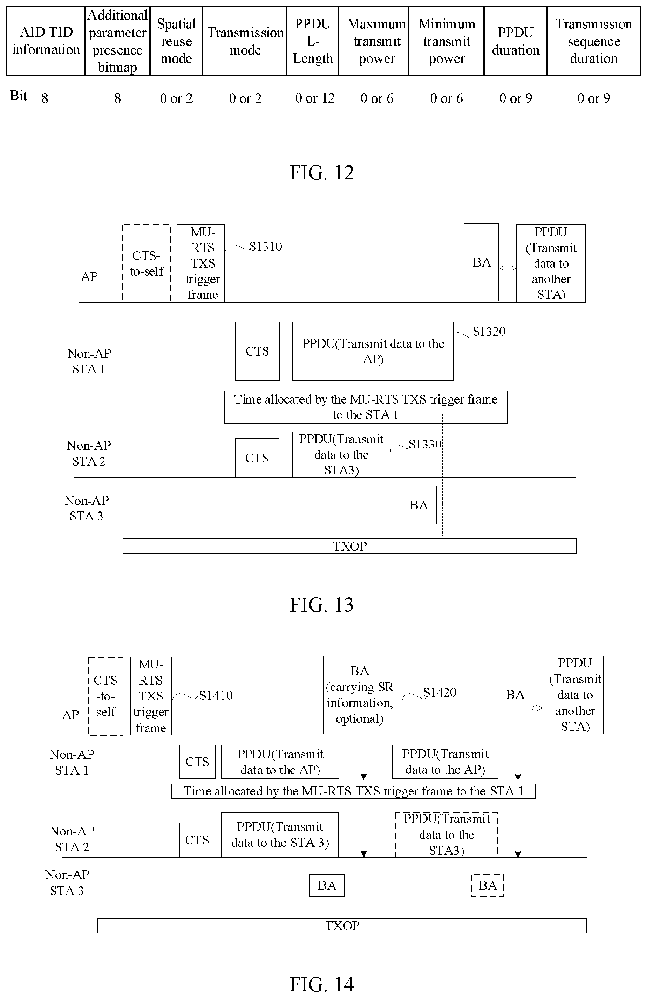

FIG. 12 is an example diagram of a format of a per AID TID field according to an embodiment of this application. As shown in FIG. 12, the per AID TID information field may include one or more of the following fields: AID TID information, additional parameter presence bitmap, spatial reuse mode, transmission mode, PPDU L_Length, maximum transmit power, minimum transmit power, PPDU duration, or transmission sequence duration. Detailed descriptions of these fields are provided above.

In FIG. 12, values of the acknowledgement type field and the TID field in the AID TID information field may use reserved values in related technologies. For example, the value of the acknowledgement type field is 0 or 1, and a value of a TID subfield is 8.

In FIG. 12, the additional parameter presence bitmap field may include a first bitmap. If the i^{th} field starting from the spatial reuse mode field is present in this element, the i^{th} entry (for example, the i^{th} bit) of the first bitmap may be set to 1.

It should be noted that the method provided in embodiments of this application may be applied to a spatial reuse-based transmission method in a single BSS scenario, and also to spatial reuse in a multi-AP coordination scenario.

The first STA and the second STA may perform transmission according to an indication of the first frame and/or the second frame to avoid interference between the first STA and the second STA due to identification. For example, in the time of an allocated TXOP, to avoid or reduce mutual interference between PPDU transmission exchanged between a scheduled STA (set as a STA 1) and an AP and PPDU transmission exchanged between another scheduled STA (set as a STA 2) and its P2P peer STA (for example, a STA3), the scheduled STA STA 1 may perform uplink PPDU transmission according to a spatial reuse mode, a transmission power parameter (minimum transmission power and/or maximum transmission power) and/or another transmission parameter requirement indicated by the first frame or the second frame. Simultaneously, the scheduled STA STA 2 performs P2P PPDU transmission based on the spatial reuse mode, transmission power (minimum transmission power and/or maximum transmission power) parameter and/or another transmission parameter requirement indicated by the first frame or the second frame, thereby limiting the interference caused by the P2P PPDU transmission to PPDU receiving and transmitting of the AP within an allowable range.

For ease of understanding, the following provides detailed explanations of this application by using Embodiment 1 to Embodiment 3.

### Embodiment 1

FIG. 13 is a schematic flowchart of a wireless communication method according to Embodiment 1. The method illustrated in FIG. 13 may be performed by an AP, a non-AP STA 1 (STA 1 for short), a non-AP STA 2 (STA 2 for short), and a non-AP STA 3 (STA3 for short). The AP may be the first device. The non-AP STA 1 and the non-AP STA 2 may be the first STA and the second STA, respectively.

In Embodiment 1, a spatial reuse-based TXS procedure may be implemented. The spatial reuse-based TXS procedure may allow the AP to allocate a part of an obtained TXOP to two or more associated STAs (including a non-AP station associated with the AP). In a case of two or more associated STAs, the STA 1 may transmit an MPDU to an AP associated with the STA 1 or its peer station (for example, a P2P peer station), and the STA 2 transmits an MPDU to its peer station (for example, a P2P station). The PPDUs respectively transmitted by the STA 1 and the STA 2 may overlap in time domain and frequency domain.

The method illustrated in FIG. 13 may include step S1310 to step S1330.

In step S1310, an AP transmits an MU-RTS TXS trigger frame.

The MU-RTS TXS trigger frame may be the first frame described above. The MU-RTS TXS trigger frame may be used to trigger spatial reuse-based TXOP sharing.

A value of a "trigger TXOP sharing mode" subfield in the MU-RTS TXS trigger frame indicates that MU-RTS initiates a TXS procedure, and a scheduled STA may transmit MPDU(s) to its associated AP or transmit MPDU(s) to another STA (for example, its P2P peer STA); and/or another scheduled STA may transmit MPDU(s) to another STA (for example, its P2P peer STA) or transmit MPDU(s) to its associated AP. Specifically, a spatial reuse mode subfield in a common information field of the MU-RTS TXS trigger frame may indicate that: in duration of a sharing TXOP, P2P continuous transmission sequence duration between a scheduled station and another station is less than or equal to transmission duration of an uplink PPDU (that is, a PPDU carrying an MPDU transmitted to the AP) initiated by another scheduled station. For example, a value of the "trigger TXOP sharing mode" field triggered by the MU-RTS TXS trigger frame may be 3. A value of the spatial reuse mode subfield in the common information field of the MU-RTS TXS trigger frame is 1.

The MU-RTS TXS trigger frame may include a plurality of user information fields. The plurality of user information fields may include a user information field directed to a STA 1 and a user information field directed to a STA 2, which are described below.

In the user information field directed to the STA 1 (that is, the AID12 subfield of the user information field corresponds to an AID12 value of the STA 1), a value of a transmission mode subfield is 1 (that is, indicating that the STA 1 will transmit an MPDU to its associated AP in part of duration of a shared TXOP), also indicating that the STA 1 transmits PPDU L_Length and/or PPDU duration for an uplink PPDU in the part of duration of the shared TXOP, and indicating a minimum transmit power and/or maximum a transmit power for the STA 1.

In the user information field directed to the STA 2 (that is, the AID12 subfield corresponds to an AID12 value of the STA 2), a value of the transmission mode subfield is 2 (that is, indicating that the STA 2 will transmit an MPDU to another station in part of duration of a shared TXOP (that is, perform P2P transmission)), also indicating continuous transmission sequence duration for the STA 2 to perform P2P transmission in the part of duration of the shared TXOP, such that the P2P continuous transmission sequence duration is less than or equal to duration of the uplink PPDU initiated by the STA 1, and also indicating a maximum transmit power and/or a minimum transmit power for the STA 2.

In addition to indicating the trigger TXOP sharing mode, the MU-RTS TXS trigger frame also indicates one or more of the following: scheduled station(s) (which may include one or more stations), TXOP duration allocated to each station, a transmission mode for each station (for example, transmitting an MPDU to its associated AP (that is, uplink transmission) or transmitting an MPDU to another station (that is, P2P transmission)), a transmission power parameter for each station (for example, a minimum transmission power and/or a maximum transmission power), transmission PPDU duration for each station, or another transmission parameter corresponding to each station (for example, transmission bandwidth, a quantity of spatial streams, an MCS parameter, an FEC coding type, and a target receive power).

In step S1320, the STA 1 transmits a PPDU to the AP.

In step S1330, the STA 2 transmits a PPDU to a STA3.

In a time of an allocated TXOP, to avoid or reduce mutual interference between PPDU transmission exchanged between the STA 1 and the AP, and PPDU transmission exchanged between the STA 2 and the STA3, the scheduled station STA 1 needs to perform uplink PPDU transmission according to the spatial reuse mode, the transmission power parameter (minimum transmission power and/or maximum transmission power) and/or another transmission parameter requirement indicated by the MU-RTS TXS trigger frame. Moreover, the scheduled station STA 2 needs to perform P2P PPDU transmission according to the spatial reuse mode, transmission power (minimum transmission power and/or maximum transmission power) parameter and/or another transmission parameter requirement indicated by the MU-RTS TXS trigger frame, thereby limiting interference caused by the P2P PPDU transmission to the AP and reception of the transmitted PPDU within an allowable range.

Specifically, when the AP allocates part of duration of the obtained TXOP to different stations for spatial reuse-based transmission, P2P continuous transmission sequence duration initiated by one scheduled station is limited within a range of transmission duration of an uplink PPDU (that is, a PPDU carrying an MPDU transmitted to the AP) initiated by another scheduled station, to avoid interference from the P2P transmission to reception of the PPDU performed by the scheduled station that performs frame exchange with the AP. In this case, before triggering a spatial reuse-based TXS procedure, the AP may determine, based on path loss between scheduled stations (for example, the STA 1 and the STA 2) and the AP respectively, an interference level of a receive end acceptable for the AP, a data transmission requirement of the scheduled stations (for example, based on a BSR report reported by the stations), and/or path loss between two scheduled stations and an interference level of a receive end acceptable for the scheduled stations, which stations may be scheduled and allocated resources for transmitting an MPDU to the AP, which stations may be scheduled and allocated resources for transmitting an MPDU to another station (for example, a P2P peer station), and a transmission power parameter requirement (including the minimum transmission power and/or maximum transmission power) for the scheduled stations to transmit a PPDU.

Optionally, before transmitting the MU-RTS TXS trigger frame, CTS-to-self frame transmission is performed. In a time of the allocated TXOP, a scheduled STA (that is, the STA 1) transmits an uplink non-TB PPDU (carrying an MPDU transmitted to the AP). In addition, in the time of the allocated TXOP, another scheduled STA (that is, the STA 2) transmits a P2P PPDU (carrying an MPDU transmitted to the STA3). A PPDU exchanged between the STA 1 and the AP and a PPDU exchanged between the STA 2 and the STA3 may overlap in time domain and frequency domain.

### Embodiment 2

FIG. 14 is a schematic flowchart of a wireless communication method according to Embodiment 2. The method illustrated in FIG. 14 may be performed by an AP, a non-AP STA 1 (STA 1 for short), a non-AP STA 2 (STA 2 for short), and a non-AP STA 3 (STA3 for short). The AP may be the first device. The non-AP STA 1 and the non-AP STA 2 may be the first STA and the second STA, respectively.

In Embodiment 2, a spatial reuse-based TXS procedure may be implemented. The spatial reuse-based TXS procedure allows the AP to allocate a part of an obtained TXOP to two or more associated STAs (including a non-AP station associated with the AP). One station (denoted as the STA 1) transmits an MPDU to an AP associated with the station or its peer station (for example, a P2P peer station), and another STA (denoted as the STA 2) transmits an MPDU to its peer station (for example, a P2P station). The PPDUs respectively transmitted by the STA 1 and the STA 2 may overlap in time domain and frequency domain.

The method illustrated in FIG. 14 may include steps S1410 and S1420.

In step S1410, an AP transmits an MU-RTS TXS trigger frame.

The MU-RTS TXS trigger frame may be the first frame described above. The MU-RTS TXS trigger frame may be used to trigger spatial reuse-based TXOP sharing.

A value of a "trigger TXOP sharing mode" subfield in the MU-RTS TXS trigger frame indicates that MU-RTS initiates a TXS procedure, and a scheduled STA may transmit MPDU(s) to its associated AP or transmit MPDU(s) to another STA (for example, its P2P peer STA); and/or another scheduled STA may transmit MPDU(s) to another STA (for example, its P2P peer STA) or transmit MPDU(s) to its associated AP. Specifically, a spatial reuse mode subfield in a common information field of the MU-RTS TXS trigger frame may indicate that: in duration of a sharing TXOP, P2P continuous transmission sequence duration between a scheduled station and another station is less than or equal to transmission duration of an uplink PPDU (that is, a PPDU carrying an MPDU transmitted to the AP) initiated by another scheduled station. For example, a value of the "trigger TXOP sharing mode" field triggered by the MU-RTS TXS trigger frame may be 3. A value of the spatial reuse mode subfield in the common information field of the MU-RTS TXS trigger frame is 1.

Optionally, before transmitting the MU-RTS TXS trigger frame, the AP may perform CTS-to-self frame transmission. In a time of the allocated TXOP, a scheduled STA (that is, the STA 1) transmits an uplink non-TB PPDU (carrying an MPDU transmitted to the AP). In addition, in the time of the allocated TXOP, another scheduled STA (that is, the STA 2) transmits a P2P PPDU (carrying an MPDU transmitted to the STA3). A PPDU exchanged between the STA 1 and the AP and a PPDU exchanged between the STA 2 and the STA3 may overlap in time domain and frequency domain.

In the duration of the sharing TXOP, the STA 1 transmits the first uplink PPDU to the AP. Simultaneously, P2P transmission occurs between the STA 2 and the STA3. According to the indication of the MU-RTS TXS trigger frame, continuous transmission sequence duration for the P2P transmission between the STA 2 and the STA3 is less than or equal to transmission duration for the uplink PPDU initiated by the STA 1 (that is, the PPDU carrying an MPDU transmitted to the AP).

In step S1420, the AP feeds back a BA frame for an uplink PPDU transmitted by the STA 1.

The BA frame may be used to adjust the spatial reuse transmission mode and transmission parameter.

After receiving the first uplink PPDU transmitted by the STA 1, the AP may determine, based on an SNR or SINR for receiving the PPDU and successful reception of a data frame, whether to continue allowing the STA 2 to perform P2P transmission (that is, perform spatial reuse) in subsequent part of duration of the TXOP, and whether to adjust or update the transmission parameter of the STA 1 and/or the STA 2, and carry the information in the BA frame (which may be a multi-station BA frame).

The BA frame in step S1420 may be transmitted simultaneously to the STA 1 and the STA 2, indicating whether to enable spatial reuse and a spatial reuse mode after a block acknowledgement frame during a current TXOP, whether transmission performed by the STA 2 and its transmission mode are allowed, and transmission parameters updated for the STA 1 and/or STA 2 such as PPDU L_Length, maximum transmit power, minimum transmit power, PPDU duration, and transmission sequence duration.

For example, the AP may set a value of a transmission mode subfield in a per AID TID information (Per AID TID Info) subfield corresponding to the STA 2 in the BA frame to 0, instructing the STA 2 to transmit no PPDU but remain in a monitoring state in part of duration of a TXOP following the BA.

### Embodiment 3

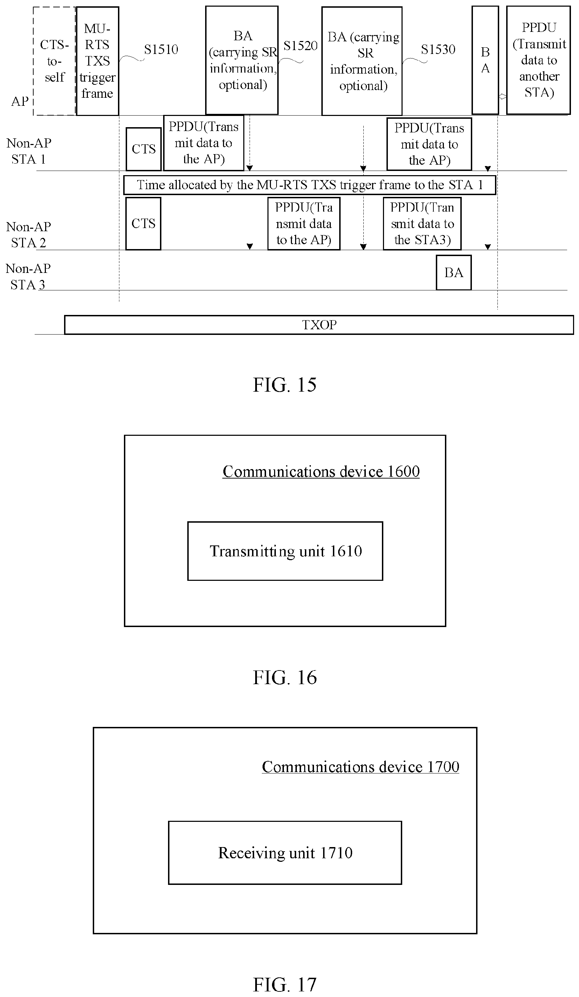

FIG. 15 is a schematic flowchart of a wireless communication method according to Embodiment 3. The method illustrated in FIG. 15 may be performed by an AP, a non-AP STA 1 (STA 1 for short), a non-AP STA 2 (STA 2 for short), and a non-AP STA 3 (STA3 for short). The AP may be the first device. The non-AP STA 1 and the non-AP STA 2 may be the first STA and the second STA, respectively.

In Embodiment 3, a spatial reuse-based TXS procedure may be implemented. The spatial reuse-based TXS procedure allows the AP to allocate a part of an obtained TXOP to two or more associated STAs (including a non-AP station associated with the AP). One station (denoted as the STA 1) transmits an MPDU to an AP associated with the station or its peer station (for example, a P2P peer station), and another STA (denoted as the STA 2) transmits an MPDU to its peer station (for example, a P2P station). The PPDUs respectively transmitted by the STA 1 and the STA 2 may overlap in time domain and frequency domain.

The method illustrated in FIG. 15 may include steps S1510 to S1530.

In step S1510, an AP transmits an MU-RTS TXS trigger frame.

The MU-RTS TXS trigger frame may be the first frame described above. The MU-RTS TXS trigger frame may be used to trigger spatial reuse-based TXOP sharing.

A value of a "trigger TXOP sharing mode" subfield in the MU-RTS TXS trigger frame indicates that MU-RTS initiates a TXS procedure, and a scheduled STA may transmit MPDU(s) to its associated AP or transmit MPDU(s) to another STA (for example, its P2P peer STA); and/or another scheduled STA may transmit MPDU(s) to another STA (for example, its P2P peer STA) or transmit MPDU(s) to its associated AP. Specifically, a spatial reuse mode subfield in a common information field of the MU-RTS TXS trigger frame may indicate that: in duration of a sharing TXOP, P2P continuous transmission sequence duration between a scheduled station and another station is less than or equal to transmission duration of an uplink PPDU (that is, a PPDU carrying an MPDU transmitted to the AP) initiated by another scheduled station. For example, a value of the "trigger TXOP sharing mode" field triggered by the MU-RTS TXS trigger frame may be 3. A value of the spatial reuse mode subfield in the common information field of the MU-RTS TXS trigger frame is 1.

The MU-RTS TXS trigger frame may include a plurality of user information fields. The plurality of user information fields may include a user information field directed to a STA 1 and a user information field directed to a STA 2, which are described below.

In the user information field directed to the STA 1 (that is, the AID12 subfield corresponds to an AID12 value of the STA 1), a value of a transmission mode subfield is 1 (that is, indicating that the STA 1 will transmit an MPDU to its associated AP in part of duration of a shared TXOP), also indicating that the STA 1 transmits PPDU L_Length or PPDU duration for an uplink PPDU in the part of duration of the shared TXOP, and indicating a minimum transmit power or maximum a transmit power for the STA 1.

In the user information field directed to the STA 2 (that is, the AID12 subfield corresponds to an AID12 value of the STA 2), a value of the transmission mode subfield is 0 (indicating that the STA 2 transmit no PPDU in the part of duration of the TXOP but remains in a monitoring state), to facilitate the STA 2 monitoring an uplink PPDU signal subsequently transmitted by the STA 1 for channel sounding.

Optionally, before transmitting the MU-RTS TXS trigger frame, the AP may perform CTS-to-self transmission. After the AP completes transmission of the MU-RTS TXS trigger frame, in the time of the allocated TXOP, a scheduled STA (that is, the STA 1) transmits an uplink non-TB PPDU (carrying an MPDU transmitted to the AP); simultaneously, in a time of an allocated TXOP, another scheduled STA (that is, STA 2) remains in a monitoring state according to the indication of the MU-RTS TXS trigger frame.

In step S1520, based on the received uplink PPDU transmitted by the STA 2, the AP transmits a corresponding BA frame to the STA 1 and the STA 2.

In step S1530, based on the received uplink PPDU transmitted by the STA 1, the AP transmits a corresponding BA frame to the STA 1 and the STA 2.

The AP may determine whether a condition for spatial reuse is met by receiving an uplink PPDU signal transmitted by the STA 1 and based on a transmit power for transmitting a PPDU by the STA 1.

The STA 2 may subsequently report, to the AP by using an allocated resource, received feedback information (for example, received power, RSSI, or whether spatial reuse is allowed) about the uplink PPDU signal transmitted by the STA 1.

After receiving the feedback information reported by the STA 2, the AP may determine whether spatial reuse-based transmission is allowed in part of duration of a subsequent TXOP, as well as a spatial reuse mode and a transmission parameter (SR indication for short) for a scheduled station.

The AP may carry SR information in a BA frame (which may be a multi-station BA frame) and transmit the BA frame simultaneously to the STA 1 and the STA 2, indicating whether to enable spatial reuse and a spatial reuse mode after a block acknowledgement frame during a current TXOP, whether transmission performed by the STA 1 or STA 2 and its transmission mode are allowed, and transmission parameters updated for the STA 1 and/or STA 2 such as PPDU L_Length, maximum transmit power, minimum transmit power, PPDU duration, and transmission sequence duration.

As shown in FIG. 15, the BA frame in step S1520 indicates that spatial reuse is not enabled after the BA frame and the STA 1 is not allowed for transmission and is instructed to enter a monitoring state, and indicates that transmission parameters such as PPDU L_Length, maximum transmit power, minimum transmit power, PPDU duration, and transmission sequence duration are updated for the STA 2.

The BA frame in step S1530 indicates that spatial reuse is enabled after the BA frame, the STA 1 and the STA 2 are allowed to perform spatial reuse transmission, a length of a PPDU transmitted by the STA 1 to the AP is greater than a length of a PPDU transmitted by the STA 2 to a P2P device, and indicates that transmission parameters such as PPDU L_Length, maximum transmit power, minimum transmit power, PPDU duration, and transmission sequence duration are updated for the STA 1 and the STA 2.

The method embodiments of this application are described above in detail. Apparatus embodiments of this application are described below in detail. It should be understood that the descriptions of the method embodiments correspond to descriptions of the apparatus embodiments, and therefore, for parts that are not described in detail, reference may be made to the foregoing method embodiments.

FIG. 16 is a schematic diagram of a structure of a communications device 1600 according to an embodiment of this application. The communications device 1600 is a first device and the communications device 1600 includes a transmitting unit 1610.

The transmitting unit 1610 is configured to transmit a first frame, where the first frame is used to indicate that the first device shares part of duration of a TXOP obtained by the first device with a plurality of STAs. The plurality of STAs include a first STA and a second STA, and in the part of duration of the TXOP, a data unit transmitted by a first STA and a data unit transmitted by a second STA are allowed to overlap fully or partially in time domain and frequency domain.

In embodiments of this application, the communications device 1600 may be used to perform some or all of the method steps executed by the first device in the foregoing method embodiments. The method procedures have been described in detail in the foregoing implementations. The modules in this embodiment have the same functions or perform the same steps, which will not be repeated herein. However, those skilled in the art should know that, the text descriptions corresponding to the foregoing methods may be incorporated into this embodiment, corresponding to the modules in the communications device 1600.

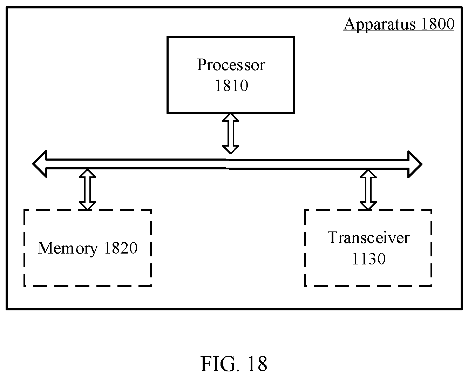

In an optional embodiment, the transmitting unit 1610 may be a transceiver 1830. The communications device 1600 may further include a processor 1810 and a memory 1820, which are specifically shown in FIG. 18.

FIG. 17 is a schematic diagram of a structure of a communications device 1700 according to an embodiment of this application. The communications device 1700 is a second device. The communications device 1700 includes a receiving unit 1710.

The receiving unit 1710 is configured to receive a first frame transmitted by a first device. The second device includes a first STA or a second STA, the first frame is used to indicate that the first device shares part of duration of a TXOP obtained by the first device with a plurality of STAs, and the plurality of STAs include a first STA and a second STA. In the part of duration of the TXOP, a data unit transmitted by the first STA and a data unit transmitted by the second STA are allowed to overlap fully or partially in time domain and frequency domain.

In embodiments of this application, the communications device 1700 may be used to perform some or all of the method steps executed by the first device in the foregoing method embodiments. The method procedures have been described in detail in the foregoing implementations. The modules in this embodiment have the same functions or perform the same steps, which will not be repeated herein. However, those skilled in the art should know that, the text descriptions corresponding to the foregoing methods may be incorporated into this embodiment, corresponding to the modules in the communications device 1700.

In an optional embodiment, the receiving unit 1710 may be a transceiver 1830. The communications device 1700 may further include a processor 1810 and a memory 1820, which are specifically shown in FIG. 18.

FIG. 18 is a schematic structural diagram of an apparatus for communication according to an embodiment of this application. Dashed lines in FIG. 18 indicate that a unit or module is optional. The apparatus 1800 may be configured to implement the methods described in the foregoing method embodiments. The apparatus 1800 may be a chip or a communications device.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, where the program may be executed by the processor 1810, to cause the processor 1810 to execute the methods described in the method embodiments. The memory 1820 may be separated from or integrated into the processor 1810.

The apparatus 1800 may further include a transceiver 1830. The processor 1810 may communicate with another device or chip by using the transceiver 1830. For example, the processor 1810 may transmit data to and receive data from another device or chip through the transceiver 1830.

An embodiment of this application further provides a computer-readable storage medium for storing a program. The computer-readable storage medium may be applied to the communications device provided in embodiments of this application, and the program causes a computer to perform the method executed by the communications device in various embodiments of this application.

An embodiment of this application further provides a computer program product. The computer program product includes a program. The computer program product may be applied to the communications device provided in embodiments of this application, and the program causes a computer to perform the methods performed by the communications device in various embodiments of this application.

An embodiment of this application further provides a computer program. The computer program may be applied to the communications device provided in embodiments of this application, and the computer program causes a computer to execute the methods executed by the communications device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In this embodiment of this application, a "field" may also be referred to as a "domain (field)", a "subdomain (subfield)", or a "subfield (subfield)". One field may occupy one or more bytes (byte/octet), or one field may occupy one or more bits (bit).

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by prestoring corresponding code, tables, or other forms that may be used to indicate related information in devices (for example, including an AP and an STA), and a specific implementation thereof is not limited in this application. For example, being predefined may refer to being defined in a protocol.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In embodiments of this application, the "protocol" may refer to a standard protocol in the communications field, and may include, for example, a WiFi protocol, and a related protocol applied to a future WiFi communications system, which is not limited in this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first device, a first frame,
wherein the first frame is used to indicate that the first device shares all or part of frequency domain resources or time domain resources of a transmission opportunity TXOP obtained by the first device with a plurality of stations (STAs), the plurality of STAs comprise a first STA and a second STA, and in part of duration of the TXOP that is shared, a data unit transmitted by the first STA and a data unit transmitted by the second STA are allowed to overlap fully or partially in time domain and frequency domain.

2. The method according to claim 1, wherein the first frame is further used to indicate whether spatial reuse transmission is allowed for the data unit transmitted by the first STA and the data unit transmitted by the second STA.

3. The method according to claim 1 or 2, wherein the first frame is further used to indicate that:
in the part of duration of the TXOP, the first STA is capable of transmitting a data unit to an associated access point or a STA different from the first STA; and/or
in the part of duration of the TXOP, the second STA is capable of transmitting a data unit to an associated access point or a STA different from the second STA.

4. The method according to any one of claims 1 to 3, wherein in the part of duration of the TXOP, duration of a continuous transmission sequence of the first STA is first duration, duration of a continuous transmission sequence of the second STA is second duration, and the first frame is further used to indicate a size relationship between the first duration and the second duration.

5. The method according to any one of claims 1 to 4, wherein the first frame is used to trigger the first STA and the second STA to transmit a data unit.

6. The method according to any one of claims 1 to 4, wherein
the first frame is used to trigger the first STA to transmit the data unit and to trigger the second STA to monitor or receive the data unit transmitted by the first STA; or
the first frame is used to trigger the second STA to transmit the data unit and to trigger the first STA to monitor or receive the data unit transmitted by the second STA.

7. The method according to claim 6, wherein
the second STA monitoring or receiving the data unit transmitted by the first STA comprises that: the second STA determines information of a reception parameter of the data unit transmitted by the first STA and estimates a path loss of the first STA based on the reception parameter; and/or
the first STA monitoring or receiving the data unit transmitted by the second STA comprises that: the first STA determines information of a reception parameter of the data unit transmitted by the second STA and estimates a path loss of the second STA based on the reception parameter.

8. The method according to claim 7, wherein the information of the reception parameter comprises one or more of following: received signal strength indicator RSSI, received channel power indicator RCPI, transmit power, packet error rate, or signal-to-noise ratio.

9. The method according to any one of claims 1 to 8, wherein the first frame is further used to indicate a transmission parameter of the first STA in the part of duration of the TXOP.

10. The method according to claim 9, wherein the transmission parameter of the first STA in the part of duration of the TXOP is indicated by using a user information field corresponding to the first STA.

11. The method according to any one of claims 1 to 10, further comprising:
transmitting, by the first device, a second frame,
wherein the second frame is used to adjust a transmission parameter of the first STA in the part of duration of the TXOP.

12. The method according to claim 11, wherein the transmission parameter of the first STA in the part of duration of the TXOP is determined based on information of a reception parameter of the data unit transmitted by the first STA and monitored or received by the second STA.

13. The method according to claim 11 or 12, wherein the second frame comprises a block acknowledgement frame transmitted by the first device, and the block acknowledgement frame corresponds to the data unit transmitted by the first STA.

14. The method according to claim 13, wherein the block acknowledgement frame is a multi-station block acknowledgement frame.

15. The method according to claim 13 or 14, wherein the adjusted transmission parameter of the first STA in the part of duration of the TXOP is indicated by using a per AID TID information field.

16. The method according to any one of claims 9 to 13, wherein the transmission parameter of the first STA in the part of duration of the TXOP comprises one or more of following:
first information, used to indicate an identity of the first STA;
resource unit allocation, used to indicate a size and/or a location of a resource unit corresponding to a TXOP shared by the first device with the first STA;
allocation duration, used to indicate duration of a TXOP shared by the first device with the first STA;
a transmission mode, used to indicate that the first STA is triggered to transmit the data unit, or that the first STA is triggered to monitor or receive a data unit or an associated signal of the data unit;
a receiver type, used to indicate whether a receiver of the data unit transmitted by the first STA is an associated access point or a STA different from the first STA;
transmission duration, used to indicate duration allowed for a continuous transmission sequence of the first STA;
a first length, used to indicate a value of an L-SIG length field of the data unit transmitted by the first STA;
third duration, used to indicate duration allowed for the data unit transmitted by the first STA;
a transmit power, used to indicate a power range allowed for the data unit transmitted by the first STA; or
second information, used to indicate a field comprised in a transmission parameter field of the first STA, wherein the transmission parameter field is used to carry monitoring of the transmission parameter of the first STA in the part of duration of the TXOP.

17. The method according to claim 16, wherein the transmit power comprises one or more of following: a maximum transmit power, or a minimum transmit power.

18. The method according to claim 16 or 17, wherein the second information is indicated by a first bitmap, a target bit in the first bitmap corresponds to a first field capable of being comprised in the transmission parameter field of the first STA, and the target bit is used to indicate whether the transmission parameter field comprises the first field.

19. The method according to any one of claims 16 to 18, wherein the duration of the continuous transmission sequence of the first STA comprises: duration of continuous frame interaction between the first STA and a peer STA of the first STA.

20. The method according to any one of claims 9 to 19, wherein the first frame comprises third information, the third information is used to indicate whether a transmission parameter field of the first STA exists, and the transmission parameter field is used to carry the transmission parameter of the first STA in the part of duration of the TXOP.

21. The method according to any one of claims 1 to 20, wherein the first frame is a multi-user request to send transmission opportunity sharing trigger frame.

22. The method according to any one of claims 1 to 21, wherein the data unit comprises a physical layer protocol data unit PPDU.

23. The method according to any one of claims 1 to 22, wherein the first device comprises an access point device, the first STA is a non-access point STA, the second STA is a non-access point STA, and both the first STA and the second STA are associated with the first device.

24. A wireless communication method, comprising:
receiving, by a second device, a first frame transmitted by a first device,
wherein the second device comprises a first STA or a second STA, the first frame is used to indicate that the first device shares part of duration of a transmission opportunity TXOP obtained by the first device with a plurality of STAs, the plurality of STAs comprise a first STA and a second STA, and in the part of duration of the TXOP, a data unit transmitted by the first STA and a data unit transmitted by the second STA are allowed to overlap fully or partially in time domain and frequency domain.

25. The method according to claim 24, wherein the first frame is further used to indicate whether spatial reuse transmission is allowed for the data unit transmitted by the first STA and the data unit transmitted by the second STA.

26. The method according to claim 24 or 25, wherein the first frame is further used to indicate that:
in the part of duration of the TXOP, the first STA is capable of transmitting a data unit to an associated access point or a STA different from the first STA; and/or
in the part of duration of the TXOP, the second STA is capable of transmitting a data unit to an associated access point or a STA different from the second STA.

27. The method according to any one of claims 24 to 26, wherein in the part of duration of the TXOP, duration of a continuous transmission sequence of the first STA is first duration, duration of a continuous transmission sequence of the second STA is second duration, and the first frame is further used to indicate a size relationship between the first duration and the second duration.

28. The method according to any one of claims 24 to 27, wherein the first frame is used to trigger the first STA and the second STA to transmit a data unit.

29. The method according to any one of claims 24 to 27, wherein
the first frame is used to trigger the first STA to transmit the data unit and to trigger the second STA to monitor or receive the data unit transmitted by the first STA; or
the first frame is used to trigger the second STA to transmit the data unit and to trigger the first STA to monitor or receive the data unit transmitted by the second STA.

30. The method according to claim 29, wherein
the second STA monitoring or receiving the data unit transmitted by the first STA comprises that: the second STA determines information of a reception parameter of the data unit transmitted by the first STA and estimates a path loss of the first STA based on the reception parameter; and/or
the first STA monitoring or receiving the data unit transmitted by the second STA comprises that: the first STA determines information of a reception parameter of the data unit transmitted by the second STA and estimates a path loss of the second STA based on the reception parameter.

31. The method according to claim 30, wherein the information of the reception parameter comprises one or more of following: received signal strength indicator RSSI, received channel power indicator RCPI, transmit power, packet error rate, or signal-to-noise ratio.

32. The method according to any one of claims 24 to 31, wherein the first frame is further used to indicate a transmission parameter of the first STA in the part of duration of the TXOP.

33. The method according to claim 32, wherein in a case that the second device comprises the first STA, the method further comprises:
transmitting, by the second device, the data unit based on the transmission parameter, indicated by the first frame, of the first STA in the part of duration of the TXOP.

34. The method according to claim 32 or 33, wherein the transmission parameter of the first STA in the part of duration of the TXOP is indicated by using a user information field corresponding to the first STA.

35. The method according to any one of claims 24 to 34, further comprising:
receiving, by the second device, a second frame transmitted by the first device,
wherein the second frame is used to adjust a transmission parameter of the first STA in the part of duration of the TXOP.

36. The method according to claim 35, wherein in a case that the second device comprises the first STA, the method further comprises:
transmitting, by the second device, the data unit based on the adjusted transmission parameter of the first STA in the part of duration of the TXOP.

37. The method according to claim 35 or 36, wherein the transmission parameter of the first STA in the part of duration of the TXOP is determined based on information of a reception parameter of the data unit transmitted by the first STA and monitored or received by the second STA.

38. The method according to any one of claims 35 to 37, wherein the second frame comprises a block acknowledgement frame transmitted by the first device, and the block acknowledgement frame corresponds to the data unit transmitted by the first STA.

39. The method according to claim 38, wherein the block acknowledgement frame is a multi-station block acknowledgement frame.

40. The method according to claim 38 or 39, wherein the adjusted transmission parameter of the first STA in the part of duration of the TXOP is indicated by using a per AID TID information field.

41. The method according to any one of claims 32 to 40, wherein the transmission parameter of the first STA in the part of duration of the TXOP comprises one or more of following:
first information, used to indicate an identity of the first STA;
resource unit allocation, used to indicate a size and/or a location of a resource unit corresponding to a TXOP shared by the first device with the first STA;
allocation duration, used to indicate duration of a TXOP shared by the first device with the first STA;
a transmission mode, used to indicate that the first STA is triggered to transmit the data unit, or that the first STA is triggered to monitor or receive a data unit or an associated signal of the data unit;
a receiver type, used to indicate whether a receiver of the data unit transmitted by the first STA is an associated access point or a STA different from the first STA;
transmission duration, used to indicate duration allowed for a continuous transmission sequence of the first STA;
a first length, used to indicate a value of an L-SIG length field of the data unit transmitted by the first STA;
third duration, used to indicate duration allowed for the data unit transmitted by the first STA;
a transmit power, used to indicate a power range allowed for the data unit transmitted by the first STA; or
second information, used to indicate a field comprised in a transmission parameter field of the first STA, wherein the transmission parameter field is used to carry the transmission parameter of the first STA in the part of duration of the TXOP.

42. The method according to claim 41, wherein the transmit power comprises one or more of following: a maximum transmit power, or a minimum transmit power.

43. The method according to claim 41 or 42, wherein the second information is indicated by a first bitmap, a target bit in the first bitmap corresponds to a first field capable of being comprised in the transmission parameter field of the first STA, and the target bit is used to indicate whether the transmission parameter field comprises the first field.

44. The method according to any one of claims 41 to 43, wherein the duration of the continuous transmission sequence of the first STA comprises: duration of continuous frame interaction between the first STA and a peer STA of the first STA.

45. The method according to any one of claims 32 to 44, wherein the first frame comprises third information, the third information is used to indicate whether a transmission parameter field of the first STA exists, and the transmission parameter field is used to carry the transmission parameter of the first STA in the part of duration of the TXOP.

46. The method according to any one of claims 24 to 45, wherein the first frame is a multi-user request to send transmission opportunity sharing trigger frame.

47. The method according to any one of claims 24 to 46, wherein the data unit comprises a physical layer protocol data unit PPDU.

48. The method according to any one of claims 24 to 47, wherein the first device comprises an access point device, the first STA is a non-access point STA, the second STA is a non-access point STA, and both the first STA and the second STA are associated with the first device.

49. A communications device, wherein the communications device is a first device, and the communications device comprises:
a transmitting unit, configured to transmit a first frame,
wherein the first frame is used to indicate that the first device shares part of duration of a transmission opportunity TXOP obtained by the first device with a plurality of STAs, the plurality of STAs comprise a first STA and a second STA, and in part of duration of the TXOP, a data unit transmitted by the first STA and a data unit transmitted by the second STA are allowed to overlap fully or partially in time domain and frequency domain.

50. The communications device according to claim 49, wherein the first frame is further used to indicate whether spatial reuse transmission is allowed for the data unit transmitted by the first STA and the data unit transmitted by the second STA.

51. The communications device according to claim 49 or 50, wherein the first frame is further used to indicate:
in the part of duration of the TXOP, the first STA is capable of transmitting a data unit to an associated access point or a STA different from the first STA; and/or
in the part of duration of the TXOP, the second STA is capable of transmitting a data unit to an associated access point or a STA different from the second STA.

52. The communications device according to any one of claims 49 to 51, wherein in the part of duration of the TXOP, duration of a continuous transmission sequence of the first STA is first duration, duration of a continuous transmission sequence of the second STA is second duration, and the first frame is further used to indicate a size relationship between the first duration and the second duration.

53. The communications device according to any one of claims 49 to 52, wherein the first frame is used to trigger the first STA and the second STA to transmit a data unit.

54. The communications device according to any one of claims 49 to 52, wherein
the first frame is used to trigger the first STA to transmit the data unit and to trigger the second STA to monitor or receive the data unit transmitted by the first STA; or
the first frame is used to trigger the second STA to transmit the data unit and to trigger the first STA to monitor or receive the data unit transmitted by the second STA.

55. The communications device according to claim 54, wherein
the second STA monitoring or receiving the data unit transmitted by the first STA comprises that: the second STA determines information of a reception parameter of the data unit transmitted by the first STA and estimates a path loss of the first STA based on the reception parameter; and/or
the first STA monitoring or receiving the data unit transmitted by the second STA comprises that: the first STA determines information of a reception parameter of the data unit transmitted by the second STA and estimates a path loss of the second STA based on the reception parameter.

56. The communications device according to claim 55, wherein the information of the reception parameter comprises one or more of following: received signal strength indicator RSSI, received channel power indicator RCPI, transmit power, packet error rate, or signal-to-noise ratio.

57. The communications device according to any one of claims 49 to 56, wherein the first frame is further used to indicate a transmission parameter of the first STA in the part of duration of the TXOP.

58. The communications device according to claim 57, wherein the transmission parameter of the first STA in the part of duration of the TXOP is indicated by using a user information field corresponding to the first STA.

59. The communications device according to any one of claims 49 to 58, wherein the communications device is further configured to:
transmit a second frame,
wherein the second frame is used to adjust a transmission parameter of the first STA in the part of duration of the TXOP.

60. The communications device according to claim 59, wherein the transmission parameter of the first STA in the part of duration of the TXOP is determined based on a reception parameter of the data unit transmitted by the first STA and monitored or received by the second STA.

61. The communications device according to claim 59 or 60, wherein the second frame comprises a block acknowledgement frame transmitted by the first device, and the block acknowledgement frame corresponds to the data unit transmitted by the first STA.

62. The communications device according to claim 61, wherein the block acknowledgement frame is a multi-station block acknowledgement frame.

63. The communications device according to claim 61 or 62, wherein the adjusted transmission parameter of the first STA in the part of duration of the TXOP is indicated by using a per AID TID information field.

64. The communications device according to any one of claims 57 to 63, wherein the transmission parameter of the first STA in the part of duration of the TXOP comprises one or more of following:
first information, used to indicate an identity of the first STA;
resource unit allocation, used to indicate a size and/or a location of a resource unit corresponding to a TXOP shared by the first device with the first STA;
allocation duration, used to indicate duration of a TXOP shared by the first device with the first STA;
a transmission mode, used to indicate that the first STA is triggered to transmit the data unit, or that the first STA is triggered to monitor or receive a data unit or an associated signal of the data unit;
a receiver type, used to indicate whether a receiver of the data unit transmitted by the first STA is an associated access point or a STA different from the first STA;
transmission duration, used to indicate duration allowed for a continuous transmission sequence of the first STA;
a first length, used to indicate a value of an L-SIG length field of the data unit transmitted by the first STA;
third duration, used to indicate duration allowed for the data unit transmitted by the first STA;
a transmit power, used to indicate a power range allowed for the data unit transmitted by the first STA; or
second information, used to indicate a field comprised in a transmission parameter field of the first STA, wherein the transmission parameter field is used to carry the transmission parameter of the first STA in the part of duration of the TXOP.

65. The communications device according to claim 64, wherein the transmit power comprises one or more of following: a maximum transmit power, or a minimum transmit power.

66. The communications device according to claim 64 or 65, wherein the second information is indicated by a first bitmap, a target bit in the first bitmap corresponds to a first field capable of being comprised in the transmission parameter field of the first STA, and the target bit is used to indicate whether the transmission parameter field comprises the first field.

67. The communications device according to any one of claims 64 to 66, wherein the duration of the continuous transmission sequence of the first STA comprises: duration of continuous frame interaction between the first STA and a peer STA of the first STA.

68. The communications device according to any one of claims 57 to 67, wherein the first frame comprises third information, the third information is used to indicate whether a transmission parameter field of the first STA exists, and the transmission parameter field is used to carry the transmission parameter of the first STA in the part of duration of the TXOP.

69. The communications device according to any one of claims 49 to 68, wherein the first frame is a multi-user request to send transmission opportunity sharing trigger frame.

70. The communications device according to any one of claims 49 to 69, wherein the data unit comprises a physical layer protocol data unit PPDU.

71. The communications device according to any one of claims 49 to 70, wherein the first device comprises an access point device, the first STA is a non-access point STA, the second STA is a non-access point STA, and both the first STA and the second STA are associated with the first device.

72. A communications device, wherein the communications device is a second device, and the communications device comprises:
a receiving unit, configured to receive a first frame transmitted by a first device,
wherein the second device comprises a first STA or a second STA, the first frame is used to indicate that the first device shares part of duration of a transmission opportunity TXOP obtained by the first device with a plurality of STAs, the plurality of STAs comprise a first STA and a second STA, and in the part of duration of the TXOP, a data unit transmitted by the first STA and a data unit transmitted by the second STA are allowed to overlap fully or partially in time domain and frequency domain.

73. The communications device according to claim 72, wherein the first frame is further used to indicate whether spatial reuse transmission is allowed for the data unit transmitted by the first STA and the data unit transmitted by the second STA.

74. The communications device according to claim 72 or 73, wherein the first frame is further used to indicate:
in the part of duration of the TXOP, the first STA is capable of transmitting a data unit to an associated access point or a STA different from the first STA; and/or
in the part of duration of the TXOP, the second STA is capable of transmitting a data unit to an associated access point or a STA different from the second STA.

75. The communications device according to any one of claims 72 to 74, wherein in the part of duration of the TXOP, duration of a continuous transmission sequence of the first STA is first duration, duration of a continuous transmission sequence of the second STA is second duration, and the first frame is further used to indicate a size relationship between the first duration and the second duration.

76. The communications device according to any one of claims 72 to 75, wherein the first frame is used to trigger the first STA and the second STA to transmit a data unit.

77. The communications device according to any one of claims 72 to 75, wherein
the first frame is used to trigger the first STA to transmit the data unit and to trigger the second STA to monitor or receive the data unit transmitted by the first STA; or
the first frame is used to trigger the second STA to transmit the data unit and to trigger the first STA to monitor or receive the data unit transmitted by the second STA.

78. The communications device according to claim 77, wherein
the second STA monitoring or receiving the data unit transmitted by the first STA comprises that: the second STA determines information of a reception parameter of the data unit transmitted by the first STA and estimates a path loss of the first STA based on the reception parameter; and/or
the first STA monitoring or receiving the data unit transmitted by the second STA comprises that: the first STA determines information of a reception parameter of the data unit transmitted by the second STA and estimates a path loss of the second STA based on the reception parameter.

79. The communications device according to claim 78, wherein the information of the reception parameter comprises one or more of following: received signal strength indicator RSSI, received channel power indicator RCPI, transmit power, packet error rate, or signal-to-noise ratio.

80. The communications device according to any one of claims 72 to 79, wherein the first frame is further used to indicate a transmission parameter of the first STA in the part of duration of the TXOP.

81. The communications device according to claim 80, wherein in a case that the second device comprises the first STA, the communications device is further configured to:
transmit the data unit based on the transmission parameter, indicated by the first frame, of the first STA in the part of duration of the TXOP.

82. The communications device according to claim 80 or 81, wherein the transmission parameter of the first STA in the part of duration of the TXOP is indicated by using a user information field corresponding to the first STA.

83. The communications device according to any one of claims 72 to 82, wherein the communications device is further configured to:
receive a second frame transmitted by the first device,
wherein the second frame is used to adjust a transmission parameter of the first STA in the part of duration of the TXOP.

84. The communications device according to claim 83, wherein in a case that the second device comprises the first STA, the communications device is further configured to:
transmit the data unit based on the adjusted transmission parameter of the first STA in the part of duration of the TXOP.

85. The communications device according to claim 83 or 84, wherein the transmission parameter of the first STA in the part of duration of the TXOP is determined based on information of a reception parameter of the data unit transmitted by the first STA and monitored or received by the second STA.

86. The communications device according to any one of claims 83 to 85, wherein the second frame comprises a block acknowledgement frame transmitted by the first device, and the block acknowledgement frame corresponds to the data unit transmitted by the first STA.

87. The communications device according to claim 86, wherein the block acknowledgement frame is a multi-station block acknowledgement frame.

88. The communications device according to claim 86 or 87, wherein the adjusted transmission parameter of the first STA in the part of duration of the TXOP is indicated by using a per AID TID information field.

89. The communications device according to any one of claims 80 to 88, wherein the transmission parameter of the first STA in the part of duration of the TXOP comprises one or more of following:
first information, used to indicate an identity of the first STA;
resource unit allocation, used to indicate a size and/or a location of a resource unit corresponding to a TXOP shared by the first device with the first STA;
allocation duration, used to indicate duration of a TXOP shared by the first device with the first STA;
a transmission mode, used to indicate that the first STA is triggered to transmit the data unit, or that the first STA is triggered to monitor or receive a data unit or an associated signal of the data unit;
a receiver type, used to indicate whether a receiver of the data unit transmitted by the first STA is an associated access point or a STA different from the first STA;
transmission duration, used to indicate duration allowed for a continuous transmission sequence of the first STA;
a first length, used to indicate a value of an L-SIG length field of the data unit transmitted by the first STA;
third duration, used to indicate duration allowed for the data unit transmitted by the first STA;
a transmit power, used to indicate a power range allowed for the data unit transmitted by the first STA; or
second information, used to indicate a field comprised in a transmission parameter field of the first STA, wherein the transmission parameter field is used to carry the transmission parameter of the first STA in the part of duration of the TXOP.

90. The communications device according to claim 89, wherein the transmit power comprises one or more of following: a maximum transmit power, or a minimum transmit power.

91. The communications device according to claim 89 or 90, wherein the second information is indicated by a first bitmap, a target bit in the first bitmap corresponds to a first field capable of being comprised in the transmission parameter field of the first STA, and the target bit is used to indicate whether the transmission parameter field comprises the first field.

92. The communications device according to any one of claims 89 to 91, wherein the duration of the continuous transmission sequence of the first STA comprises: duration of continuous frame interaction between the first STA and a peer STA of the first STA.

93. The communications device according to any one of claims 80 to 92, wherein the first frame comprises third information, the third information is used to indicate whether a transmission parameter field of the first STA exists, and the transmission parameter field is used to carry the transmission parameter of the first STA in the part of duration of the TXOP.

94. The communications device according to any one of claims 72 to 93, wherein the first frame is an MU-RTS TXS trigger frame.

95. The communications device according to any one of claims 72 to 94, wherein the data unit comprises a physical layer protocol data unit PPDU.

96. The communications device according to any one of claims 72 to 95, wherein the first device comprises an access point device, the first STA is a non-access point STA, the second STA is a non-access point STA, and both the first STA and the second STA are associated with the first device.

97. A communications device, comprising a memory and a processor, wherein the memory is configured to store a program, and the processor is configured to invoke the program in the memory to cause the communications device to execute the method according to any one of claims 1 to 48.

98. An apparatus, comprising a processor configured to invoke a program from a memory, to cause the apparatus to execute the method according to any one of claims 1 to 48.

99. A chip, comprising a processor, configured to invoke a program from a memory to cause a device installed with the chip to execute the method according to any one of claims 1 to 48.

100. A computer-readable storage medium, wherein the computer-readable storage medium stores a program, and the program causes a computer to execute the method according to any one of claims 1 to 48.

101. A computer program product, comprising a program that causes a computer to execute the method according to any one of claims 1 to 48.

102. A computer program, wherein the computer program causes a computer to execute the method according to any one of claims 1 to 48.
